# EUROPEAN PATENT APPLICATION

(11) **EP 1 906 712 A2**
(43) Date of publication of application: **02.04.2008**
(21) Application number: 07018911.3
(22) Date of filing: 26.09.2007
(51) Int. Cl.: H05B 41/282

(54) **Inverter circuit and backlight assembly including said inverter circuit**

(30) Priority: 28.09.2006 KR 20060094924
(71) Applicant: Samsung Electronics Co., Ltd., Yeongtong-gu Suwon-city, Gyeonggi-do 442-742 (KR)
(72) Inventor: Lee, Yun-Gun, Cheonan-si Chungcheongnam-do (KR); Jang, Jin-Won, Asan-si Chungcheongnam-do (KR); Shimura, Tatsuhisa, Tokyo 106-8532 (JP); Sengoku, Osamu, Tokyo 106-8532 (JP)
(74) Representative: Weitzel, Wolfgang

(57) **Abstract**

An inverter circuit includes plural pairs of third coils, in which adjacent third coils are serially connected to each other so as to offset AC voltage generated from the paired third coils, one end of the paired third coils being connected to ground. Input terminals of plural diodes are connected to one end of the paired third coils so as to generate the voltage detection value by detecting voltage generated from the paired third coils. A fault detector compares the voltage detection value generated from the diodes with a predetermined threshold value to detect a fault and generates the comparison result.

## Description

### CROSS-REFERENCE TO RELATED APPLICATION

This application relies for priority upon Korean Patent Application No. 2006-94924 filed on September 28, 2006, the disclosure of which is incorporated herein by reference.

### BACKGROUND

### Field of Invention

The present invention relates to liquid crystal displays and, more particularly, to a backlight assembly having an inverter for powering a plurality of discharge tubes, such as cold cathode fluorescent lamps, as a light source for the display.

### Description of the Related Art

Conventional liquid crystal displays (LCDs) are made to be lightweight, compact and have low power consumption. Since the LCD is a non-emissive device, a light source such as cold cathode fluorescent lamp is used. The cold cathode fluorescent lamp is a kind of a fluorescent lamp that operates in the regular glow discharge region using an applied AC voltage. Since the cold cathode fluorescent lamp is not preheated by a filament, it is relatively more vibration resistant, has a thinner diameter and a longer life span compared to a hot cathode fluorescent lamp but requires a higher voltage to be applied, for which an inverter circuit is used.

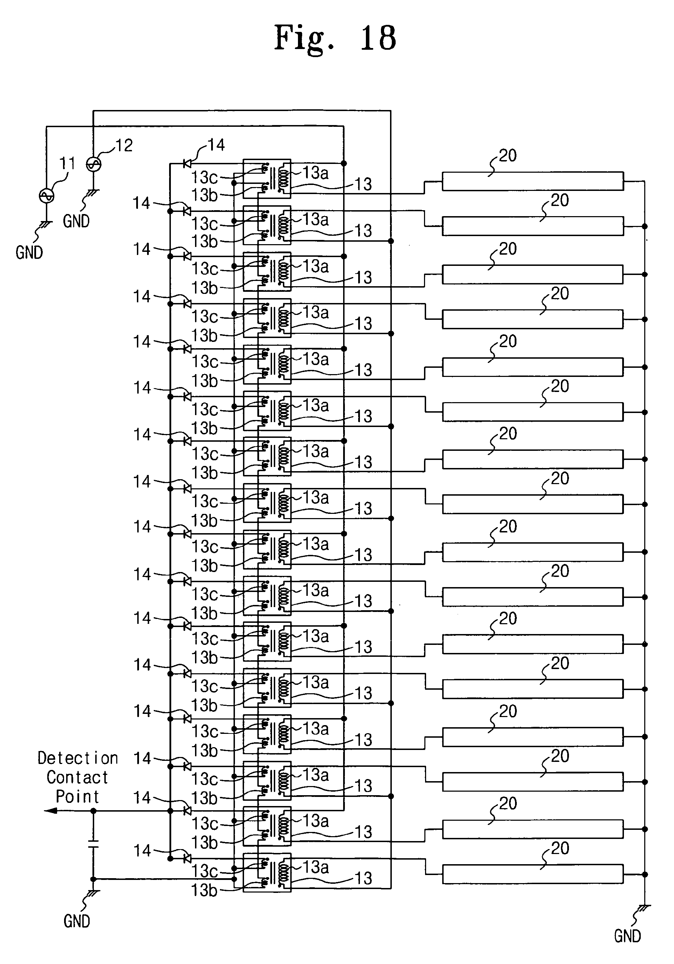

As shown in FIG. 18, the conventional inverter circuit includes first and second inverters 11 and 12, a plurality of balance transformers 1 3, and a plurality of diodes 14.

Primary coils 1 3a of the balance transformers 13 are connected to output terminals of the first and second inverters 11 and 12. The first and second inverters 11 and 1 2 convert DC voltage into AC voltage and supply the AC voltage to two pairs of cold cathode fluorescent lamps 20 through the primary coils 1 3a of the balance transformers 13.

Among the secondary coils 13b of the balance transformers 13, adjacent secondary coils 1 3b are serially connected to each other to form a secondary coil serial loop, one end of the secondary coil serial loop being connected to the ground GND.

First ends of third coils 13c of the balance transformers 13 are connected to the ground GND through the secondary coil serial loop and second ends of the third coils 1 3c of the balance transformers 1 3 are connected to input terminals of the diodes 14.

Input terminals of the diodes 14 are connected to the first ends of the third coils 1 3c. The diodes 14 detect voltage generated from the third coils 1 3c and then generate voltage detection values.

Japanese Patent Unexamined Publication No. 2005-267923 discloses an error detection circuit employed in a discharge tube control circuit that controls the turn on/off of the first and second discharge tubes. An error signal generating device generates an error signal when the current balance of the first and second discharge tubes is different from the reference current balance.

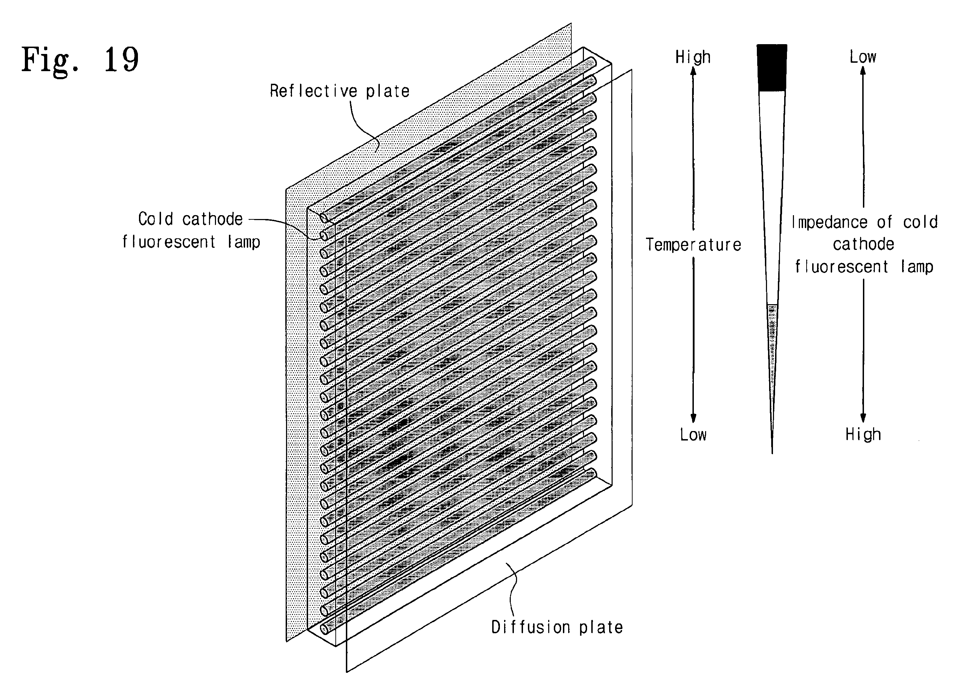

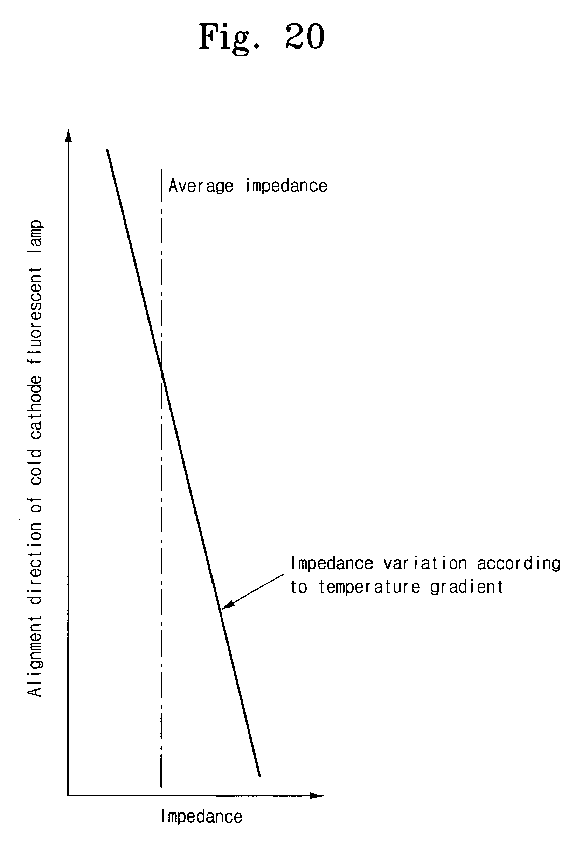

However, as shown in FIG. 19, since the cold cathode fluorescent lamps are aligned between a diffusion plate and a reflective plate, when the cold cathode fluorescent lamps are turned on, heat is transferred upward by convection along the cold cathode fluorescent lamps causing the internal temperature of the backlight assembly to rise and lowering the lamps' impedance. FIG. 20 shows that, as the cold cathode fluorescent lamps generate heat, an impedance gradient occurs in the backlight assembly caused by the temperature gradient.

The conventional inverter circuit includes a circuit that detects voltage at the diodes connected to the third coils when the impedance changes due to the temperature gradient. The voltage value due to the impedance change must be taken into consideration when setting the threshold value used to detect the normal operation and abnormal operation. As a result, the conventional inverter circuit has a higher threshold value because of the increase of the voltage value caused by the impedance change according to the temperature gradient. For this reason, when the voltage is slightly increased due to arc discharge caused by an opening fault, the voltage level may not reach the threshold value, so that the voltage variation with temperature cannot be precisely detected.

### SUMMARY

According to one aspect of the present invention, an inverter circuit precisely detects abnormal operation when the threshold voltage is increased due to the impedance change caused by the temperature gradient.

The present invention also provides a backlight assembly having the inverter circuit.

In one illustrative embodiment, an inverter circuit includes a plurality of balance transformers and a fault detection device that detects a fault based on the values of current applied to the balance transformers. The balance transformers include plural pairs of primary coils connected between the output terminals of inverters and plural pairs of discharge tubes and a plurality of secondary coils aligned corresponding to the primary coils, in which adjacent secondary coils are serially connected to each other to form a serial loop of the secondary coils, a part of the serial loop of the secondary coils being connected to ground. The fault detection device includes plural pairs of third coils aligned corresponding to the primary coils, in which adjacent third coils, which are aligned as a pair, are serially connected to each other to offset AC voltage generated from the paired third coils, one end of the paired third coils being connected to ground, a plurality of diodes having input terminals connected to the other end of the paired third coils so as to generate a voltage detection value by detecting voltage generated from the paired third coils, and a fault detector comparing the voltage detection value generated from output terminals of the diodes with a predetermined threshold value to detect a fault and generating the comparison result.

### BRIEF DESCRIPTION OF THE DRAWINGS

The above and other advantages of the present invention will become readily apparent by reference to the following detailed description when considered in conjunction with the accompanying drawings, in which:

FIG. 1 is a circuit diagram showing an inverter circuit and a backlight assembly according to a first embodiment of the present invention;

FIG. 2 is a block diagram showing the structure of an inverter and a fault detection unit of a backlight assembly according to a first embodiment of the present invention;

FIG. 3 is a circuit diagram showing an inverter circuit and a backlight assembly according to a second embodiment of the present invention;

FIG. 4 is a circuit diagram showing an inverter circuit and a backlight assembly according to a third embodiment of the present invention;

FIG. 5 is a circuit diagram showing an inverter circuit and a backlight assembly according to a fourth embodiment of the present invention;

FIG. 6 is a circuit diagram showing an inverter circuit and a backlight assembly according to a fifth embodiment of the present invention;

FIG. 7 is a circuit diagram showing an inverter circuit and a backlight assembly according to a sixth embodiment of the present invention;

FIG. 8 is a circuit diagram showing an inverter circuit and a backlight assembly according to a seventh embodiment of the present invention;

FIG. 9 is a circuit diagram showing an inverter circuit and a backlight assembly according to an eighth embodiment of the present invention;

FIG. 10 is a circuit diagram showing an inverter circuit and a backlight assembly according to a ninth embodiment of the present invention;

FIG. 11 is a circuit diagram showing an inverter circuit and a backlight assembly according to a tenth embodiment of the present invention;

FIG. 12 is a circuit diagram showing an inverter circuit and a backlight assembly according to an eleventh embodiment of the present invention;

FIG. 13 is a circuit diagram showing an inverter circuit and a backlight assembly according to a twelfth embodiment of the present invention;

FIG. 14 is a circuit diagram showing an inverter circuit and a backlight assembly according to a thirteenth embodiment of the present invention;

FIG. 15 is a circuit diagram showing an inverter circuit and a backlight assembly according to a fourteenth embodiment of the present invention;

FIG. 16 is a circuit diagram showing an inverter circuit and a backlight assembly according to a fifteenth embodiment of the present invention;

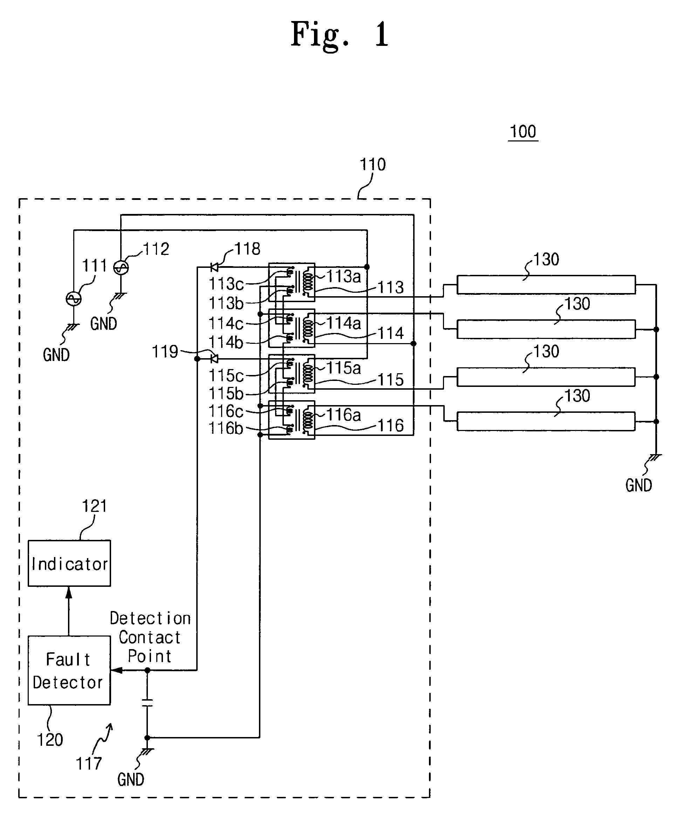

FIG. 1 7 is a circuit diagram showing an inverter circuit and a backlight assembly according to a sixteenth embodiment of the present invention;

FIG. 18 is a circuit diagram showing a conventional inverter circuit;

FIG. 19 is a perspective view showing impedance variation according to temperature variation in a backlight assembly; and

FIG. 20 is a graph showing impedance variation according to temperature variation in a backlight assembly.

### DETAILED DESCRIPTION

Hereinafter, exemplary embodiments of the present invention will be described in detail with reference to accompanying drawings. However, the scope of the present invention is not limited to such embodiments and the present invention may be realized in various forms.

Embodiment 1

FIG. 1 is a circuit diagram showing an inverter circuit and a backlight assembly according to a first embodiment of the present invention.

As shown in FIG. 1, the backlight assembly 100 includes the inverter circuit 110 and two pairs of cold cathode fluorescent lamps (discharge tubes) 130.

The inverter circuit 110 includes two inverters 111 and 112, four balance transformers 113 to 116, and a fault detection device 117.

The inverter 111 converts DC voltage into AC voltage so as to apply the AC voltage (hereinafter, referred to as positive AC voltage for the purpose of discrimination relative to AC voltage to be described below) to the two pairs of the cold cathode fluorescent lamps 130 through primary coils 113a and 115a of the balance transformers 113 and 115. The inverter 112 converts DC voltage into AC voltage so as to apply the AC voltage (hereinafter, referred to as negative AC voltage)having the same amplitude but opposite phase to the two pairs of the cold cathode fluorescent lamps 130 through primary coils 114a and 116a of the balance transformers 114 and 116.

The balance transformer 113 has the primary coil 113a connected between an output terminal of the inverter 111 and the cold cathode fluorescent lamp 130. The balance transformer 114 has the primary coil 114a connected between an output terminal of the inverter 112 and the cold cathode fluorescent lamp 130. The balance transformer 115 has the primary coil 115a connected between the output terminal of the inverter 111 and the cold cathode fluorescent lamp 130. The balance transformer 116 has the primary coil 116a connected between the output terminal of the inverter 112 and the cold cathode fluorescent lamp 130.

AC voltage is induced in the secondary coils 113b and 114b and third coils 113c and 114c by the AC voltage applied to the primary coils 113a and 1114a. In addition, AC voltage is induced into the secondary coils 115b and 116b and third coils 115c and 116c by the AC voltage applied to the primary coils 115a and 116a.

Other ends of the two pairs of the cold cathode fluorescent lamps 130 are connected to ground GND. The cold cathode fluorescent lamps 130 are driven by high voltage that causes high electrostatic noise to be generated by the cold cathode fluorescent lamps 130. To reduce the effect of this high electrostatic noise, voltages that have a phase difference of 180°are preferably applied to the cold cathode fluorescent lamps 130. According to the first embodiment as shown in FIG. 1, positive and negative high AC voltages, which are phase-shifted from each other by 180° , are applied to adjacent cold cathode fluorescent lamps 130, so that electrostatic noise generated from the cold cathode fluorescent lamps 130 is offset.

Among the secondary coils 113b, 114b, 115b and 116b of four balance transformers 113, 114, 115 and 116, adjacent secondary coils are serially connected to each other to form a serial loop, a part of the secondary coil serial loop being connected to the ground GND. The secondary coils 113b, 114b, 115b and 116b of four balance transformers 113, 114, 115 and 116 generate voltage detection values of the AC voltage induced by the primary coils 113a, 114a, 115a, and 116a and transmit the voltage detection values to a fault detector 120.

The fault detection device 117 detects high voltage abnormal discharge in the inverter circuit 110, such as corona discharge and arc discharge, which are generated when a defect occurs in an insulator provided between a high voltage section and ground GND. The fault detection device 117 detects the abnormal operation based on the voltage detection values generated from voltages of the balance transformers 113, 114, 115 and 116.

The fault detection device 117 includes two pairs of third coils 113c, 114c, 115c and 116c added to four balance transformers 113, 114, 115 and 116, two diodes 118 and 119, the fault detector 120 and an indicator 121.

Among the third coils 113c, 114c, 115c and 116c, adjacent third coils, which are aligned as a pair, are serially connected to each other so as to offset AC voltage generated from the paired third coils, one end of the paired third coils being connected to the secondary coil serial loop. In addition, one end of the paired third coils can be directly connected to the ground GND, other than connected to the ground GND through the secondary coil serial loop.

That is, the paired third coils 113c and 114c are serially connected to each other so as to offset AC voltage generated from the paired third coils 113c and 114c, one end of the paired third coils 113c and 114c is connected to the ground GND by way of the serial loop of the secondary coils 113b, 114b, 115b and 116b.

In addition, the paired third coils 115c and 116c are serially connected to each other so as to offset AC voltage generated from the paired third coils 115c and 116c, one end of the paired third coils 115c and 116c is connected to the ground GND by way of the serial loop of the secondary coils 113b, 114b, 115b and 116b.

Input terminals of the diodes 118 and 119 are connected to the paired third coils so as to detect ripple voltage generated from the paired third coils and then produce the voltage detection value.

That is, the input terminal of the diode 118 is connected to the paired third coils 113c and 114c adjacent to each other in order to produce the voltage detection value by detecting the ripple voltage generated from the paired third coils 113c and 114c.

In addition, the input terminal of the diode 119 is connected to the paired third coils 115c and 116c in order to produce the voltage detection value by detecting the ripple voltage generated from the paired third coils 115c and 116c.

The fault detector 120 is connected to output terminals of the diodes 118 and 119. The fault detector 120 compares the voltage detection value generated from voltage of the diodes 118 and 119 with the predetermined threshold value so as to detect the fault and generates the comparison result.

The indicator 121, for instance, displays the comparison result on a display device (not shown).

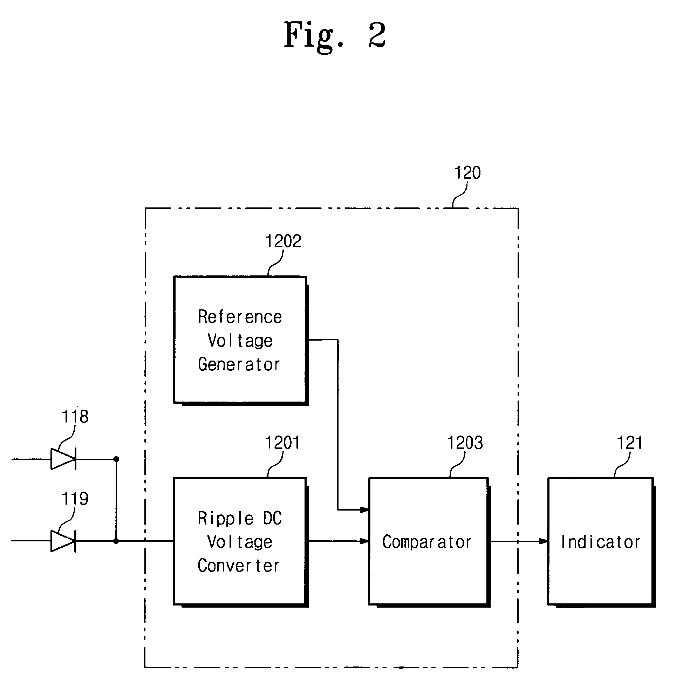

Hereinafter, an example of the fault detector 120 will be described with reference to FIG. 2. FIG. 2 is a block diagram showing an example of the fault detector 120.

As shown in FIG. 2, the fault detector 120 includes a ripple DC voltage converter 1201, a reference voltage generator 1202, and a comparator 1203.

An input terminal of the ripple DC voltage converter 1201 is connected to the output terminals of the diodes 118 and 119. An output terminal of the ripple DC voltage converter 1201 is connected to one input terminal of the comparator 1203. An output terminal of the reference voltage generator 1202 is connected to the other input terminal of the comparator 1203. An output terminal of the comparator 1203 is connected to an input terminal of the indicator 121.

The ripple DC voltage converter 1201 converts ripple voltage detected from the diodes 118 and 119 into DC voltage through filtering or peak hold scheme and sends a voltage detection value to the comparator 1203. The reference voltage generator 1202 generates reference voltage and sends the reference voltage to the comparator 1203. The comparator 1203 compares the voltage detection value output from the ripple DC voltage converter 1201 with the reference voltage value output from the reference voltage generator 1202, and sends the comparison result to the indicator 121. The indicator 121 displays the comparison result obtained from the comparator 1203.

According to the first embodiment of the present invention, the adjacent third coils, which are aligned as a pair, are serially connected to each other so that the AC voltages generated from the paired third coils are offset. In addition, one end of the paired third coils is connected to the input terminals of the diodes. Further, the fault detector 120 compares the voltage detection value generated from voltage of the diodes with the predetermined threshold value so as to detect the fault and sends the comparison result to the indicator 121. Thus, according to the first embodiment of the present invention, the threshold value used to detect the abnormal operation of the backlight assembly can be appropriately set and the abnormal operation can be precisely detected, even if the voltage rises in the backlight assembly 100 due to impedance variation caused by the temperature gradient.

That is, according to the first embodiment of the present invention, when impedance variation occurs due to the temperature gradient in the plural cold cathode fluorescent lamps 130, each paired third coils may generate voltages different from each other due to the difference in impedance, but AC voltages generated from the paired third coils, which are adjacent to each other, are offset from each other, so the threshold value can be set based on the differential voltage between the paired third coils. Thus, as compared with the conventional art, abnormal operation of the backlight assembly can be precisely detected even if the threshold value is set to a low level. Therefore, since the first embodiment of the present invention can appropriately set the threshold value, voltage variation can be precisely detected even if the voltage is slightly increased due to arc discharge caused by an opening fault and is below the threshold value under a condition of the conventional art. Thus, abnormal operation of the backlight assembly can be precisely detected.

In addition, according to the first embodiment of the present invention, only one diode is required for the paired third coils, which are adjacent to each other, so the number of diodes can be reduced as compared with the prior art in which a diode is provided for each third coil. Accordingly, the circuit structure can be simplified and the manufacturing cost can be reduced.

### Embodiment 2

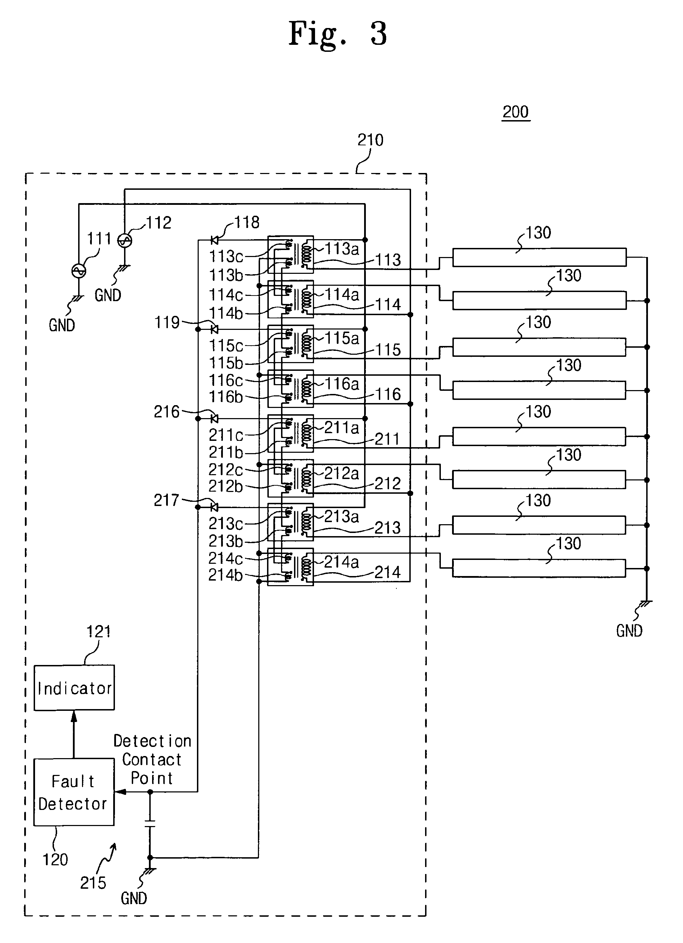

Hereinafter, a second embodiment of the present invention will be described in detail with reference to accompanying drawings. FIG. 3 is a circuit diagram showing an inverter circuit and a backlight assembly according to the second embodiment of the present invention. The same reference numerals will be assigned to the elements identical to the elements shown in the first embodiment, and detailed description thereof will be omitted in order to avoid redundancy.

As shown in FIG. 3, the backlight assembly 200 according to the second embodiment of the present invention includes the inverter circuit 210 and four pairs of cold cathode fluorescent lamps (discharge tubes) 130.

The inverter circuit 210 includes two inverters 111 and 112, eight balance transformers 113, 114, 115, 116, 211, 212, 213 and 214, and a fault detection device 21 5. That is, the inverter circuit 210 according to the second embodiment of the present invention further includes balance transformers 211, 212, 213 and 214 as compared with the inverter circuit 110 according to the first embodiment of the present invention, and the fault detection device 21 5 is provided instead of the fault detection device 117.The inverter 111 converts DC voltage into AC voltage so as to apply positive AC voltage to the four pairs of the cold cathode fluorescent lamps 130 through primary coils 113a, 115a, 211 a and 21 3a of the balance transformers 113, 115, 211 and 213. The inverter 112 converts DC voltage into AC voltage so as to apply negative AC voltage, which has amplitude identical to that of the positive AC voltage and the phase thereof is shifted by 180° as compared with that of the positive AC voltage, to the four pairs of the cold cathode fluorescent lamps 130 through primary coils 114a, 116a, 212a and 214a of the balance transformers 114, 116, 212 and 214.

The balance transformer 211 has the primary coil 211a connected to the inverter 111 in parallel to the balance transformers 113 and 115 and disposed between the output terminal of the inverter 111 and the cold cathode fluorescent lamp 130. In addition, the balance transformer 212 has the primary coil 212a connected to the inverter 112 in parallel to the balance transformers 114 and 116 and disposed between the output terminal of the inverter 112 and the cold cathode fluorescent lamp 130. Further, the balance transformer 213 has the primary coil 213a connected to the inverter 111 in parallel to the balance transformers 113 and 115 and disposed between the output terminal of the inverter 111 and the cold cathode fluorescent lamp 130. The balance transformer 214 has the primary coil 214a connected to the inverter 112 in parallel to the balance transformers 114 and 116 and disposed between the output terminal of the inverter 112 and the cold cathode fluorescent lamp 130.

AC voltage is induced to the secondary coils 211b and 212b and third coils 211c and 212c by AC voltage applied to the primary coils 211a and 212a. In addition, AC voltage is induced to the secondary coils 213b and 214b and third coils 213c and 214c by AC voltage applied to the primary coils 213a and 214a.

Among the secondary coils 211b, 21 2b, 213b and 214b of the four balance transformers 211, 212, 213 and 214, adjacent coils are serially connected to each other to form a serial loop, and a part of the secondary coil serial loop is connected to the ground GND. The secondary coils 211b, 212b, 213b and 214b of four balance transformers 211, 212, 213 and 214 generate voltage detection values of the AC voltage induced by the primary coils 211a, 212a, 213a, and 214a and transmit the voltage detection values to a fault detector 120.

The fault detection device 215 detects high voltage abnormal discharge in the inverter circuit 210, such as corona discharge and arc discharge that are generated when a defect occurs in an insulator provided between a high voltage section and the ground GND. The fault detection device 21 5 detects the abnormal operation based on the voltage detection values generated from voltages of the eight balance transformers 113, 114, 115, 116, 211, 212, 213 and 214.

The fault detection device 215 includes four pairs of third coils 113c, 114c, 115c, 116c, 211c, 212c, 213c and 214c added to the eight balance transformers 113, 114, 115, 116, 211, 212, 213 and 214, four diodes 118, 119, 216 and 217, the fault detector 120 and an indicator 121. That is, the fault detection device 215 according to the second embodiment of the present invention further includes two pairs of third coils 211c, 212c, 213c and 214c and two diodes 216 and 217 as compared with the fault detection device 117 according to the first embodiment of the present invention.

Among the third coils 211c, 212c, 213c and 214c, adjacent third coils, which are aligned as a pair, are serially connected to each other so as to offset AC voltage generated from the paired third coils, one end of the paired third coils is connected to the secondary coil serial loop. In addition, one end of the paired third coils can be directly connected to the ground GND, other than connected to the ground GND through the secondary coil serial loop.

That is, the paired third coils 211c and 212c are serially connected to each other so as to offset AC voltage generated from the paired third coils 211c and 212c, one end of the paired third coils 211c and 212c is connected to the ground GND by way of the serial loop of the secondary coils 113b, 114b, 115b, 116b, 211b, 212b, 213b and 214b.

In addition, the paired third coils 213c and 214c are serially connected to each other so as to offset AC voltage generated from the paired third coils 213c and 214c, one end of the paired third coils 213c and 214c is connected to the ground GND by way of the serial loop of the secondary coils 113b, 114b, 115b, 116b, 211b, 212b, 213b and 214b.

Input terminals of the diodes 216 and 217 are connected to the paired third coils so as to detect ripple voltage generated from the paired third coils and then produce the voltage detection value. The voltage detection value is output from the ripple DC voltage converter 1201 of the fault detector 120.

That is, the input terminal of the diode 216 is connected to the paired third coils 211c and 212c in order to produce the voltage detection value by detecting the ripple voltage generated from the paired third coils 211c and 212c.

In addition, the input terminal of the diode 217 is connected to the paired third coils 213c and 214c in order to produce the voltage detection value by detecting the ripple voltage generated from the paired third coils 213c and 214c.

### Embodiment 3

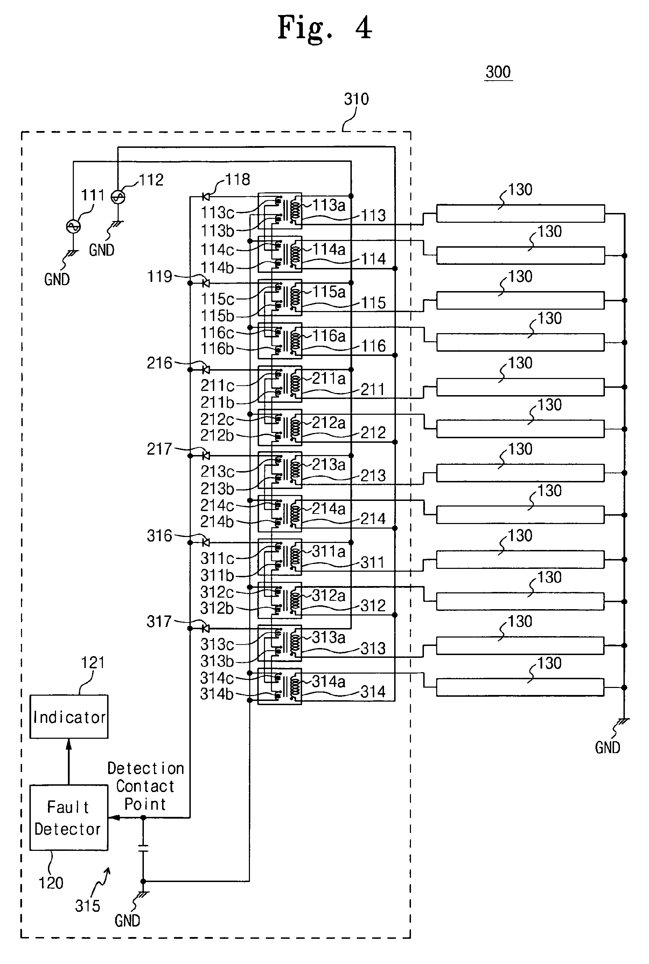

Hereinafter, a third embodiment of the present invention will be described in detail with reference to accompanying drawings. FIG. 4 is a circuit diagram showing an inverter circuit and a backlight assembly according to the third embodiment of the present invention. The same reference numerals will be assigned to the elements identical to the elements shown in the second embodiment, and detailed description thereof will be omitted in order to avoid redundancy.

As shown in FIG. 4, the backlight assembly 300 according to the third embodiment of the present invention includes the inverter circuit 310 and six pairs of cold cathode fluorescent lamps (discharge tubes) 130.

The inverter circuit 310 includes two inverters 111 and 112, twelve balance transformers 113, 114, 115, 116, 211, 212, 213, 214, 311, 312, 313 and 314, and a fault detection device 315. That is, the inverter circuit 310 according to the third embodiment of the present invention further includes balance transformers 311, 312, 313 and 314 as compared with the inverter circuit 210 according to the second embodiment of the present invention, and the fault detection device 315 is provided instead of the fault detection device 215.

The inverter 111 converts DC voltage into AC voltage so as to apply positive AC voltage to the six pairs of the cold cathode fluorescent lamps 130 through primary coils 113a, 115a, 211a, 213a, 311a and 313a of the balance transformers 113, 115, 211, 213, 311 and 313. The inverter 112 converts DC voltage into AC voltage so as to apply negative AC voltage, which has amplitude identical to that of the positive AC voltage and the phase thereof is shifted by 180° as compared with that of the positive AC voltage, to the six pairs of the cold cathode fluorescent lamps 130 through primary coils 114a, 116a, 212a, 214a, 312a and 314a of the balance transformers 114, 116, 212, 214, 312 and 314.

The balance transformer 311 has the primary coil 311 a connected to the inverter 111 in parallel to the balance transformers 113, 115, 211 and 213 and disposed between the output terminal of the inverter 111 and the cold cathode fluorescent lamp 130. In addition, the balance transformer 312 has the primary coil 312a connected to the inverter 112 in parallel to the balance transformers 114, 116, 212 and 214 and disposed between the output terminal of the inverter 112 and the cold cathode fluorescent lamp 130. Further, the balance transformer 313 has the primary coil 313a connected to the inverter 111 in parallel to the balance transformers 113, 115, 211 and 213 and disposed between the output terminal of the inverter 111 and the cold cathode fluorescent lamp 130. The balance transformer 314 has the primary coil 314a connected to the inverter 112 in parallel to the balance transformers 114, 116, 212 and 214 and disposed between the output terminal of the inverter 112 and the cold cathode fluorescent lamp 130.

AC voltage applied to the primary coils 311a and 312a is induced to the secondary coils 311b and 312b and third coils 311c and 312c by AC voltage applied to the primary coils 311a and 312a. In addition, AC voltage is induced to the secondary coils 313b and 314b and third coils 313c and 314c by AC voltage applied to the primary coils 313a and 314a.

Among the secondary coils 311b, 312b, 313b and 314b of the four balance transformers 311, 312, 313 and 314, adjacent secondary coils are serially connected to each other to form a serial loop, and a part of the secondary coil serial loop is connected to the ground GND. The secondary coils 311b, 312b, 313b and 314b of four balance transformers 311, 312, 313 and 314 generate voltage detection values of the AC voltage induced by the primary coils 311 a, 312a, 313a, and 314a and transmit the voltage detection values to a fault detector 120.

The fault detection device 315 detects high voltage abnormal discharge in the inverter circuit 310, such as corona discharge and arc discharge that are generated when a defect occurs in an insulator provided between a high voltage section and the ground GND. The fault detection device 315 detects the abnormal operation based on the voltage detection values generated from voltages of the twelve balance transformers 113, 114, 115, 116, 211, 212, 213, 214, 311, 312, 313 and 314.

The fault detection device 315 includes six pairs of third coils 113c, 114c, 115c, 116c, 211c, 212c, 213c, 214c, 311c, 312c, 313c and 314c added to the twelve balance transformers 113, 114, 115, 116, 211, 212, 213, 214, 311, 312, 313, and 314, six diodes 118, 119, 216, 217, 316 and 317, the fault detector 120 and an indicator 121. That is, the fault detection device 315 according to the third embodiment of the present invention further includes two pairs of third coils 311c, 312c, 313c and 314c and two diodes 316 and 317 as compared with the fault detection device 21 5 according to the second embodiment of the present invention.

Among the third coils 311c, 312c, 313c and 314c, adjacent third coils, which are aligned as a pair, are serially connected to each other so as to offset AC voltage generated from the paired third coils, one end of the paired third coils is connected to the secondary coil serial loop. In addition, one end of the paired third coils can be directly connected to the ground GND, other than connected to the ground GND through the secondary coil serial loop.

That is, the paired third coils 311c and 312c adjacent to each other are serially connected to each other so as to offset AC voltage generated from the paired third coils 311c and 312c, one end of the paired third coils 311c and 312c is connected to the ground GND by way of the serial loop of the secondary coils 113b, 114b, 115b, 116b, 211b, 212b, 213b, 214b, 311b, 312b, 313b and 314b.

In addition, the paired third coils 313c and 314c adjacent to each other are serially connected to each other so as to offset AC voltage generated from the paired third coils 313c and 314c, one end of the paired third coils 313c and 314c is connected to the ground GND by way of the serial loop of the secondary coils 113b, 114b, 115b, 116b, 211b, 212b, 213b, 214b, 311b, 312b, 313b and 314b.

Input terminals of the diodes 316 and 31 7 are connected to the paired third coils so as to detect ripple voltage generated from the paired third coils and then produce the voltage detection value. The voltage detection value is output from the ripple DC voltage converter 1201 of the fault detector 120.

That is, the input terminal of the diode 316 is connected to the paired third coils 311c and 312c adjacent to each other in order to produce the voltage detection value by detecting the ripple voltage generated from the paired third coils 311c and 312c.

In addition, the input terminal of the diode 317 is connected to the paired third coils 313c and 314c adjacent to each other in order to produce the voltage detection value by detecting the ripple voltage generated from the paired third coils 313c and 314c.

### Embodiment 4

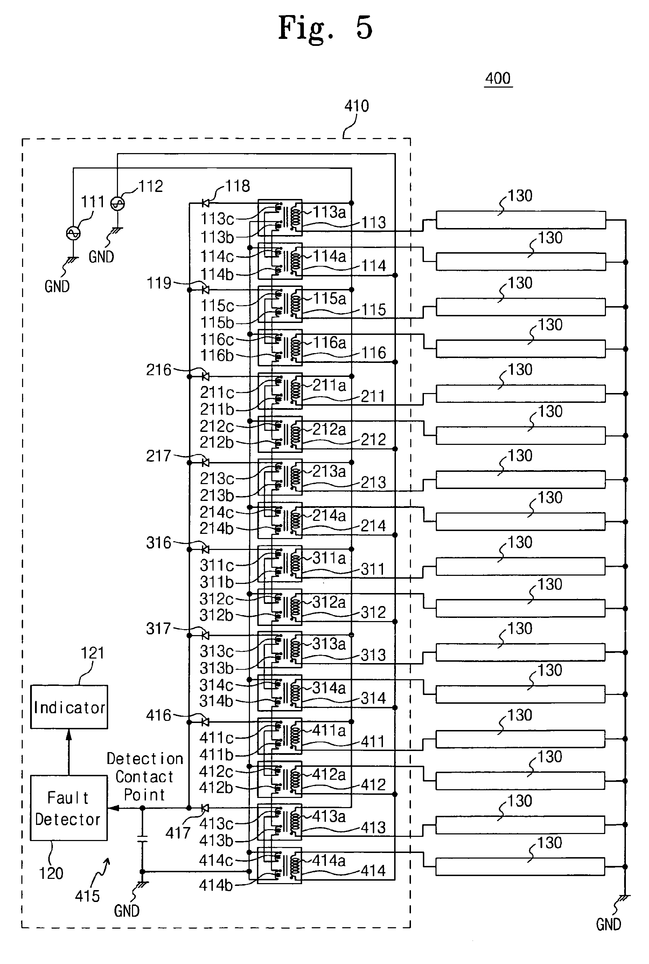

Hereinafter, a fourth embodiment of the present invention will be described in detail with reference to accompanying drawings. FIG. 5 is a circuit diagram showing an inverter circuit and a backlight assembly according to the fourth embodiment of the present invention. The same reference numerals will be assigned to the elements identical to the elements shown in the third embodiment, and detailed description thereof will be omitted in order to avoid redundancy.

As shown in FIG. 5, the backlight assembly 400 according to the fourth embodiment of the present invention includes the inverter circuit 410 and eight pairs of cold cathode fluorescent lamps (discharge tubes) 130.

The inverter circuit 410 includes two inverters 111 and 112, sixteen balance transformers 113, 114, 115, 116, 211, 212, 213, 214, 311, 312, 313, 314, 411, 412, 413 and 414, and a fault detection device 415. That is, the inverter circuit 410 according to the fourth embodiment of the present invention further includes balance transformers 411, 412, 413 and 414 as compared with the inverter circuit 310 according to the third embodiment of the present invention, and the fault detection device 41 5 is provided instead of the fault detection device 31 5.

The inverter 111 converts DC voltage into AC voltage so as to apply positive AC voltage to the eight pairs of the cold cathode fluorescent lamps 130 through primary coils 113a, 115a, 211a, 213a, 311a, 313a, 411a and 413a of the balance transformers 113, 115, 211, 213, 311, 313, 411 and 413. The inverter 112 converts DC voltage into AC voltage so as to apply negative AC voltage, which has amplitude identical to that of the positive AC voltage and the phase thereof is shifted by 180° as compared with that of the positive AC voltage, to the eight pairs of the cold cathode fluorescent lamps 130 through primary coils 114a, 116a, 212a, 214a, 312a, 314a, 412a and 414a of the balance transformers 114, 116, 212, 214, 312, 314, 412 and 414.

The balance transformer 411 has the primary coil 41 1 a connected to the inverter 111 in parallel to the balance transformers 113, 115, 211, 213, 311 and 313 and disposed between the output terminal of the inverter 111 and the cold cathode fluorescent lamp 130. In addition, the balance transformer 412 has the primary coil 41 2a connected to the inverter 112 in parallel to the balance transformers 114, 116, 212, 214, 312 and 314 and disposed between the output terminal of the inverter 112 and the cold cathode fluorescent lamp 130. Further, the balance transformer 413 has the primary coil 413a connected to the inverter 111 in parallel to the balance transformers 113, 115, 211, 213, 311 and 313 and disposed between the output terminal of the inverter 111 and the cold cathode fluorescent lamp 130. The balance transformer 414 has the primary coil 414a connected to the inverter 112 in parallel to the balance transformers 114, 116, 212, 214, 312 and 314 and disposed between the output terminal of the inverter 112 and the cold cathode fluorescent lamp 130.

AC voltage is induced to the secondary coils 411b and 412b and third coils 411c and 412c by AC voltage applied to the primary coils 411a and 412a. In addition, AC voltage is induced to the secondary coils 413b and 414b and third coils 413c and 414c by AC voltage applied to the primary coils 413a and 414a.

Among the secondary coils 411b, 412b, 413b and 414b of the four balance transformers 411, 412, 413 and 414, adjacent secondary coils are serially connected to each other to form a serial loop, and a part of the secondary coil serial loop is connected to the ground GND. The secondary coils 411b, 412b, 413b and 414b of four balance transformers 411, 412, 413 and 414 generate voltage detection values of the AC voltage induced by the primary coils 411a, 412a, 413a, and 414a and transmit the voltage detection values to a fault detector 120.

The fault detection device 415 detects high voltage abnormal discharge in the inverter circuit 410, such as corona discharge and arc discharge that are generated when a defect occurs in an insulator provided between a high voltage section and the ground GND. The fault detection device 41 5 detects the abnormal operation based on the voltage detection values generated from voltages of the sixteen balance transformers 113, 114, 115, 116, 211, 212, 213, 214, 311, 312, 313, 314, 411, 412, 413 and 414.

The fault detection device 415 includes eight pairs of third coils 113c, 114c, 115c, 116c, 211c, 212c, 213c, 214c, 311c, 312c, 313c, 314c, 411c, 412c, 413c and 414c added to the sixteen balance transformers 113, 114, 115, 116, 211, 212, 213, 214, 311, 312, 313, 314, 411, 412, 413, and 414, eight diodes 118, 119, 216, 217, 316, 317, 416 and 417, the fault detector 120 and an indicator 121. That is, the fault detection device 41 5 according to the fourth embodiment of the present invention further includes two pairs of third coils 411c, 412c, 413c and 414c and two diodes 416 and 417 as compared with the fault detection device 315 according to the third embodiment of the present invention.

Among the third coils 411c, 412c, 413c and 414c, adjacent third coils, which are aligned as a pair, are serially connected to each other so as to offset AC voltage generated from the paired third coils, one end of the paired third coils is connected to the secondary coil serial loop. In addition, one end of the paired third coils can be directly connected to the ground GND, other than connected to the ground GND through the secondary coil serial loop.

That is, the paired third coils 411c and 412c adjacent to each other are serially connected to each other so as to offset AC voltage generated from the paired third coils 411c and 412c, and one end of the paired third coils 411c and 412c is connected to the ground GND by way of the serial loop of the secondary coils 113b, 114b, 115b, 116b, 211b, 21 2b, 213b, 214b, 311b, 312b, 313b, 314b, 411b, 412b, 413b and 414b.

In addition, the paired third coils 413c and 414c adjacent to each other are serially connected to each other so as to offset AC voltage generated from the paired third coils 413c and 414c, and one end of the paired third coils 413c and 414c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

Input terminals of the diodes 416 and 417 are connected to the paired third coils so as to detect ripple voltage generated from the paired third coils and then produce the voltage detection value. The voltage detection value is output from the ripple DC voltage converter 1201 of the fault detector 120.

That is, the input terminal of the diode 416 is connected to the paired third coils 411c and 412c adjacent to each other in order to produce the voltage detection value by detecting the ripple voltage generated from the paired third coils 411c and 412c.

In addition, the input terminal of the diode 417 is connected to the paired third coils 413c and 414c adjacent to each other in order to produce the voltage detection value by detecting the ripple voltage generated from the paired third coils 413c and 414c.

### Embodiment 5

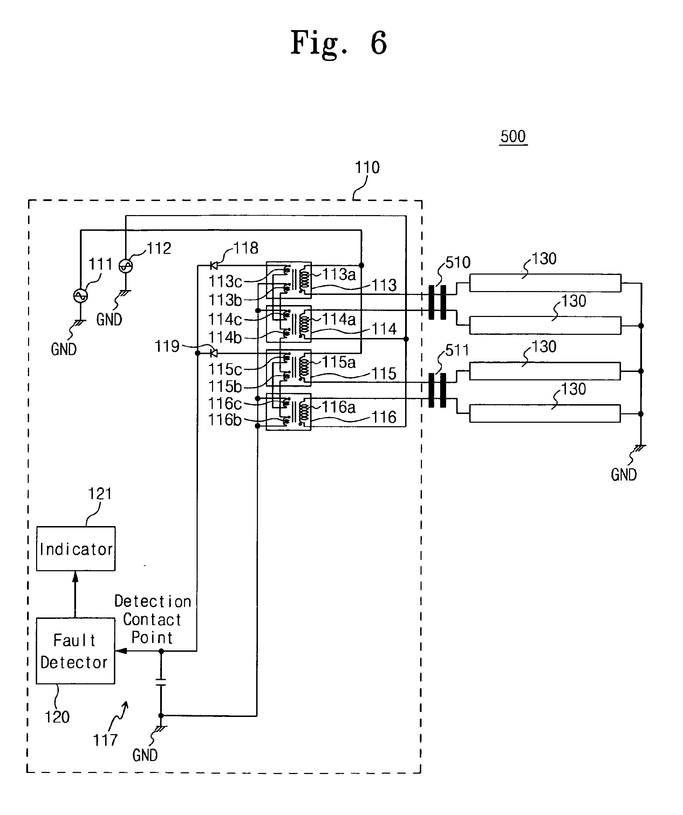

Hereinafter, a fifth embodiment of the present invention will be described in detail with reference to accompanying drawings. FIG. 6 is a circuit diagram showing an inverter circuit and a backlight assembly according to the fifth embodiment of the present invention. The same reference numerals will be assigned to the elements identical to the elements shown in the first embodiment, and detailed description thereof will be omitted in order to avoid redundancy.

As shown in FIG. 6, the backlight assembly 500 according to the fifth embodiment of the present invention includes the inverter circuit 110, two pairs of cold cathode fluorescent lamps (discharge tubes) 130, and two lamp connectors 510 and 511. That is, the backlight assembly 500 according to the fifth embodiment of the present invention further includes the lamp connectors 510 and 511 as compared with the backlight assembly 100 according to the first embodiment of the present invention.

The lamp connectors 510 and 511 combine adjacent cold cathode fluorescent lamps 130 with each other, respectively. In addition, the lamp connectors 510 and 511 connect the cold cathode fluorescent lamps 130 to the inverters 111 and 112 through primary coils 113a, 114a, 115a and 116a of the balance transformers 113, 114, 115 and 116, respectively.

That is, the lamp connector 510 connects a pair of the cold cathode fluorescent lamps 130 to the inverters 111 and 112 through primary coils 113a and 114a of the balance transformers 113 and 114, respectively.

In addition, the lamp connector 511 connects a pair of the cold cathode fluorescent lamps 130 to the inverters 111 and 112 through primary coils 115a and 116a of the balance transformers 115 and 116, respectively.

According to the fifth embodiment of the present invention, when plural pairs of cold cathode fluorescent lamps are connected to the balance transformers, two cold cathode fluorescent lamps are combined by means of the connector, so that the fifth embodiment is more efficient than the first embodiment. Further, workability can be improved when installing or exchanging the cold cathode fluorescent lamps, so the manufacturing cost can be reduced.

### Embodiment 6

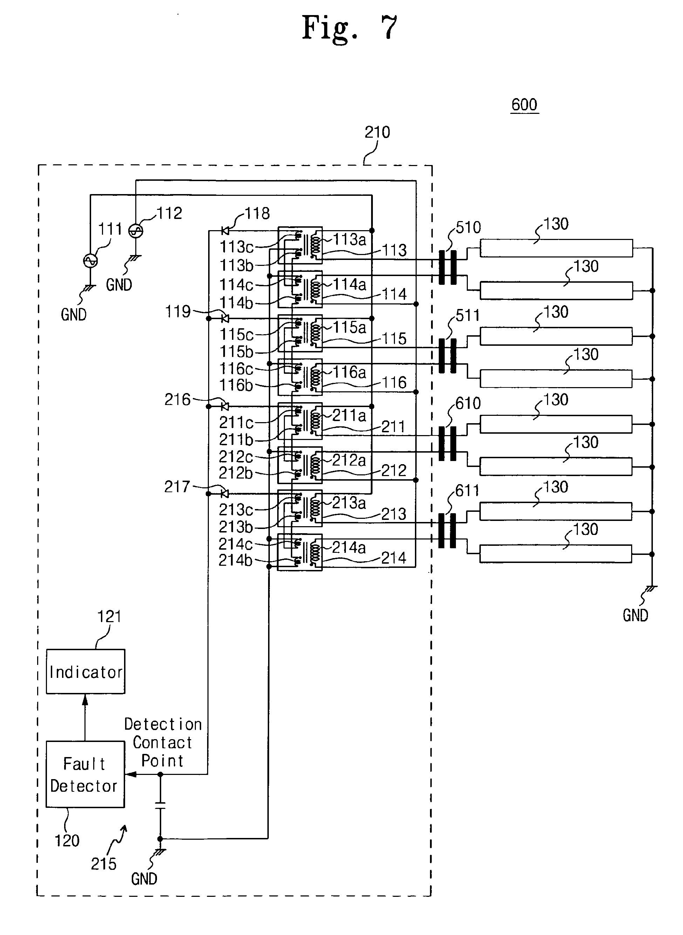

Hereinafter, a sixth embodiment of the present invention will be described in detail with reference to accompanying drawings. FIG. 7 is a circuit diagram showing an inverter circuit and a backlight assembly according to the sixth embodiment of the present invention. The same reference numerals will be assigned to the elements identical to the elements shown in the second and fifth embodiments, and detailed description thereof will be omitted in order to avoid redundancy.

As shown in FIG. 7, the backlight assembly 600 according to the sixth embodiment of the present invention includes the inverter circuit 210, four pairs of cold cathode fluorescent lamps (discharge tubes) 130, and four lamp connectors 510, 511, 610 and 611. That is, the backlight assembly 600 according to the sixth embodiment of the present invention further includes the lamp connectors 610 and 611 as compared with the backlight assemblies 200 and 500 according to the second and fifth embodiments of the present invention.

The lamp connectors 610 and 611 combine two pairs of adjacent cold cathode fluorescent lamps 130 with each other among a plurality of cold cathode fluorescent lamps 130. In addition, the lamp connectors 610 and 611 connect the cold cathode fluorescent lamps 130 to the inverters 111 and 112 through primary coils 211a, 212a, 213a and 214a of the four balance transformers 211, 212, 213 and 214, respectively.

That is, the lamp connector 610 connects a pair of the cold cathode fluorescent lamps 130 to the inverters 111 and 112 through primary coils 211a and 212a of the balance transformers 211 and 212, respectively.

In addition, the lamp connector 611 connects a pair of the cold cathode fluorescent lamps 130 to the inverters 111 and 112 through primary coils 21 3a and 214a of the balance transformers 213 and 214, respectively.

### Embodiment 7

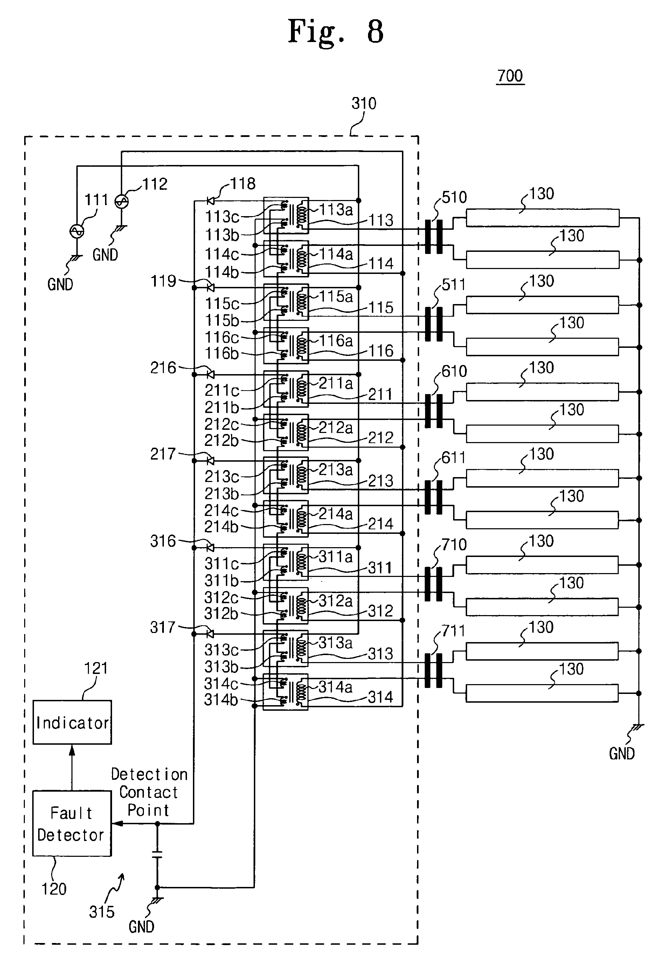

Hereinafter, a seventh embodiment of the present invention will be described in detail with reference to accompanying drawings. FIG. 8 is a circuit diagram showing an inverter circuit and a backlight assembly according to the seventh embodiment of the present invention. The same reference numerals will be assigned to the elements identical to the elements shown in the third and sixth embodiments, and detailed description thereof will be omitted in order to avoid redundancy.

As shown in FIG. 8, the backlight assembly 700 according to the seventh embodiment of the present invention includes the inverter circuit 310, six pairs of cold cathode fluorescent lamps (discharge tubes) 130, and six lamp connectors 510, 511, 610, 611, 710 and 711. That is, the backlight assembly 700 according to the seventh embodiment of the present invention further includes the lamp connectors 710 and 711 as compared with the backlight assemblies 300 and 600 according to the third and sixth embodiments of the present invention.

The lamp connectors 710 and 711 combine two pairs of adjacent cold cathode fluorescent lamps 130 with each other among a plurality of cold cathode fluorescent lamps 130. In addition, the lamp connectors 710 and 711 connect the cold cathode fluorescent lamps 130 to the inverters 111 and 112 through primary coils 311a, 312a, 313a and 314a of the four balance transformers 311, 312, 313 and 314, respectively.

That is, the lamp connector 710 connects a pair of the cold cathode fluorescent lamps 130 to the inverters 111 and 112 through primary coils 311a and 312a of the balance transformers 311 and 312, respectively.

In addition, the lamp connector 711 connects a pair of the cold cathode fluorescent lamps 130 to the inverters 111 and 112 through primary coils 313a and 314a of the balance transformers 313 and 314, respectively.

### Embodiment 8

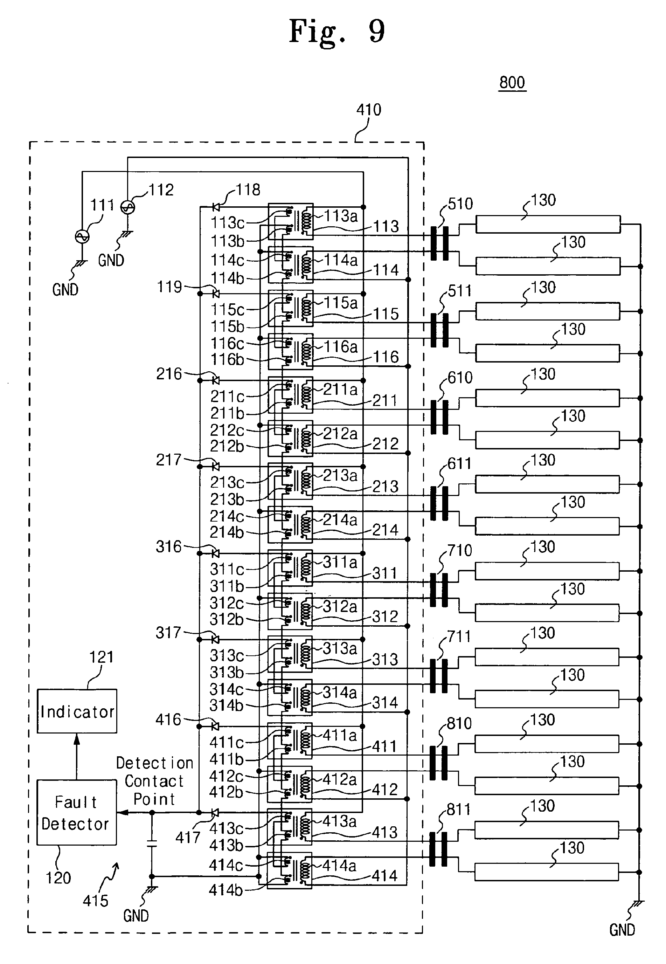

Hereinafter, an eighth embodiment of the present invention will be described in detail with reference to accompanying drawings. FIG. 9 is a circuit diagram showing an inverter circuit and a backlight assembly according to the eighth embodiment of the present invention. The same reference numerals will be assigned to the elements identical to the elements shown in the fourth and sixth embodiments, and detailed description thereof will be omitted in order to avoid redundancy.

As shown in FIG. 9, the backlight assembly 800 according to the eighth embodiment of the present invention includes the inverter circuit 410, eight pairs of cold cathode fluorescent lamps (discharge tubes) 130, and eight lamp connectors 510, 511, 610, 611, 710, 711, 810 and 811. That is, the backlight assembly 800 according to the eighth embodiment of the present invention further includes the lamp connectors 810 and 811 as compared with the backlight assemblies 400 and 700 according to the fourth and seventh embodiments of the present invention.

The lamp connectors 810 and 811 combine two pairs of adjacent cold cathode fluorescent lamps 130 with each other among a plurality of cold cathode fluorescent lamps 130. In addition, the lamp connectors 810 and 811 connect the cold cathode fluorescent lamps 130 to the inverters 111 and 112 through primary coils 411a, 412a, 413a and 414a of the four balance transformers 411, 412, 413 and 414, respectively.

That is, the lamp connector 810 connects a pair of the cold cathode fluorescent lamps 130 to the inverters 111 and 112 through primary coils 411a and 412a of the balance transformers 411 and 412, respectively.

In addition, the lamp connector 811 connects a pair of the cold cathode fluorescent lamps 130 to the inverters 111 and 112 through primary coils 413a and 414a of the balance transformers 413 and 414, respectively.

### Embodiment 9

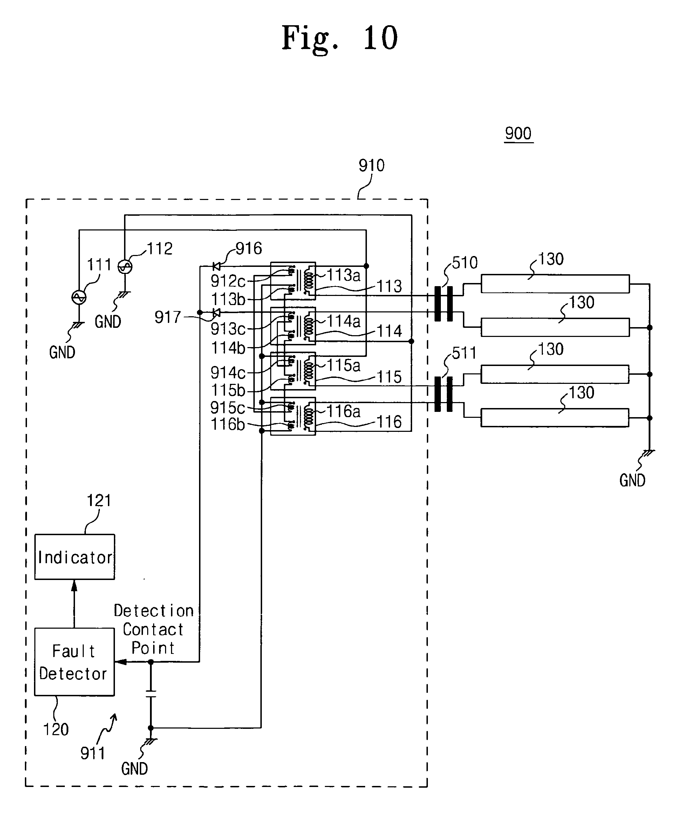

Hereinafter, a ninth embodiment of the present invention will be described in detail with reference to accompanying drawings. FIG. 10 is a circuit diagram showing an inverter circuit and a backlight assembly according to the ninth embodiment of the present invention. The same reference numerals will be assigned to the elements identical to the elements shown in the first and fifth embodiments, and detailed description thereof will be omitted in order to avoid redundancy.

As shown in FIG. 10, the backlight assembly 900 according to the ninth embodiment of the present invention includes the inverter circuit 910, two pairs of cold cathode fluorescent lamps (discharge tubes) 130, and two lamp connectors 510 and 511.

The inverter circuit 910 includes two inverters 111 and 112, four balance transformers 1 13, 114, 115 and 116, and a fault detection device 911. That is, the inverter circuit 910 according to the ninth embodiment of the present invention is identical to the inverter circuit 110 according to the first embodiment of the present invention, except for the structure of the fault detection device 911.

The fault detection device 911 detects high voltage abnormal discharge in the inverter circuit 910, such as corona discharge and arc discharge that are generated when a defect occurs in an insulator provided between a high voltage section and the ground GND. The fault detection device 911 detects the abnormal operation based on the voltage detection values generated from voltages of the balance transformers 113, 114, 115 and 116.

The fault detection device 911 includes third coils 912c, 913c, 914c, and 915c added to balance transformers 113, 114, 115 and 116, two diodes 916 and 917, a fault detector 120 and an indicator 121.

Among the third coils 912c, 913c, 914c, and 915c, paired third coils, to which AC voltage is induced from primary coils connected to different connectors, are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 912c and 915c are serially connected to each other so as to offset AC voltage generated from the paired third coils 912c and 915c, in which the AC voltage is induced to the paired third coils 912c and 915c from the primary coils 113a and 116a connected to different connectors 510 and 511, respectively. One end of the paired third coils 912c and 915c is connected to the ground GND by way of the serial loop of the secondary coils 113b, 114b, 115b and 116b.

In addition, the paired third coils 913c and 914c are serially connected to each other so as to offset AC voltage generated from the paired third coils 913c and 914c, in which the AC voltage is induced to the paired third coils 913c and 914c from the primary coils 114a and 115a connected to different connectors 510 and 511, respectively. One end of the paired third coils 913c and 914c is connected to the ground GND by way of the serial loop of the secondary coils 113b, 114b, 115b and 116b.

Input terminals of the diodes 916 and 917 are connected to one end of the paired third coils so as to detect ripple voltage generated from the paired third coils and then produce the voltage detection value.

That is, the input terminal of the diode 916 is connected to one end of the paired third coils 912c and 915c, to which the AC voltage is induced from the primary coils 113a and 116a connected to different connectors 510 and 511, respectively, in order to produce the voltage detection value by detecting the ripple voltage generated from the paired third coils 912c and 915c.

In addition, the input terminal of the diode 917 is connected to one end of the paired third coils 913c and 914c, to which the AC voltage is induced from the primary coils 114a and 115a connected to different connectors 510 and 511, in order to produce the voltage detection value by detecting the ripple voltage generated from the paired third coils 913c and 914c.

The fault detector 120 is connected to output terminals of the diodes 916 and 917. The fault detector 120 compares the voltage detection value generated from voltage of the diodes 916 and 917 with the predetermined threshold value so as to detect the fault and generates the comparison result. The comparison result is output by the indicator 121.

According to the ninth embodiment of the present invention, the paired third coils, to which the AC voltage is induced from the primary coils connected to different connectors, are serially connected to each other so that the AC voltages generated from the paired third coils are offset. In addition, one end of the paired third coils is connected to the input terminals of the diodes. Further, the fault detector 120 compares the voltage detection value generated from voltage of the diodes with the predetermined threshold value so as to detect the fault and sends the comparison result to the indicator 121. Thus, according to the ninth embodiment of the present invention, the threshold value used to detect the abnormal operation of the backlight assembly can be appropriately set and the abnormal operation can be precisely detected, even if the opening fault of the cold cathode fluorescent lamps occurs in the backlight assembly.

That is, according to the ninth embodiment of the present invention, even if the opening fault occurs in the connector that combines a pair of cold cathode fluorescent lamps with each other, since the third coil to which the AC voltage is induced from the primary coil connected between the connector and the output terminal of the inverter, is serially connected to another third coil to which the AC voltage is induced from the primary coil connected to the other connector, the AC voltage generated from the pair of third coils is offset from each other, so that the abnormal operation of the backlight assembly can be precisely detected.

In addition, according to the ninth embodiment of the present invention, only one diode is required for the paired third coils, so the number of diodes can be reduced as compared with the prior art in which the diode is provided for each third coil. Accordingly, the circuit structure can be simplified and the manufacturing cost can be reduced.

### Embodiment 10

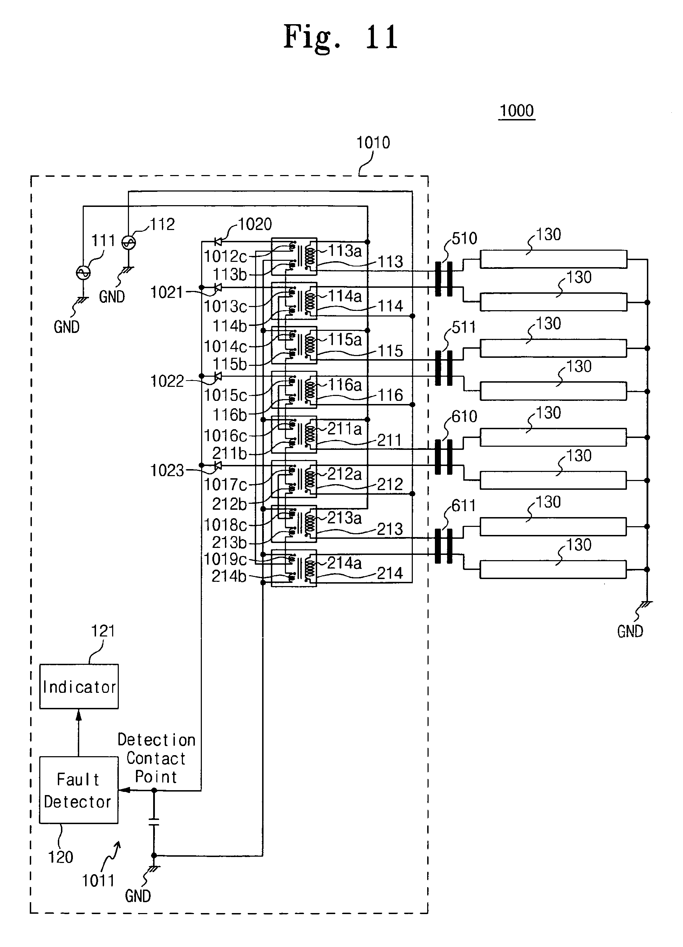

Hereinafter, a tenth embodiment of the present invention will be described in detail with reference to accompanying drawings. FIG. 11 is a circuit diagram showing an inverter circuit and a backlight assembly according to the tenth embodiment of the present invention. The same reference numerals will be assigned to the elements identical to the elements shown in the second and sixth embodiments, and detailed description thereof will be omitted in order to avoid redundancy.

As shown in FIG. 11, the backlight assembly 1000 according to the tenth embodiment of the present invention includes the inverter circuit 1010, four pairs of cold cathode fluorescent lamps (discharge tubes) 130, and four lamp connectors 510, 511, 610 and 611.

The inverter circuit 1010 includes two inverters 111 and 112, eight balance transformers 113, 114, 115, 116, 211, 212, 213 and 214 and a fault detection device 1011. That is, the inverter circuit 1010 according to the tenth embodiment of the present invention is identical to the inverter circuit 210 according to the second embodiment of the present invention, except for the structure of the fault detection device 1011.

The fault detection device 1011 detects high voltage abnormal discharge in the inverter circuit 1010, such as corona discharge and arc discharge that are generated when a defect occurs in an insulator provided between a high voltage section and the ground GND. The fault detection device 1011 detects the abnormal operation based on the voltage detection values generated from voltages of the eight balance transformers 113, 114, 115, 116, 211, 212, 213 and 214. The fault detection device 1011 includes third coils 1012c, 1013c, 1014c, 1015c, 1016c, 1017c, 1018c and 1019c added to the eight balance transformers 1113, 114, 115, 116, 211, 212, 213 and 214, four diodes 1020, 1021, 1022, and 1023, a fault detector 120 and an indicator 121.

Among the third coils 1012c, 1013c, 1014c, 1015c, 1016c, 1017c, 1018c and 1019c, paired third coils to which AC voltage is induced from primary coils connected to different connectors are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 1012c and 1019c are serially connected to each other so as to offset AC voltage generated from the paired third coils 1012c and 1019c, in which the AC voltage is induced to the paired third coils 1012c and 1019c from the primary coils 113a and 214a connected to different connectors 510 and 611. One end of the paired third coils 1012c and 1019c is connected to the ground GND by way of the serial loop of the secondary coils 113b, 114b, 115b, 116b, 211b, 212b, 213b and 214b.

In addition, the paired third coils 1013c and 1014c are serially connected to each other so as to offset AC voltage generated from the paired third coils 1013c and 1014c, in which the AC voltage is induced to the paired third coils 1013c and 1014c from the primary coils 114a and 115a connected to different connectors 510 and 511. One end of the paired third coils 1013c and 1014c is connected to the ground GND by way of the serial loop of the secondary coils 113b, 114b, 115b, 116b, 211b, 212b, 213b and 214b.

Further, the paired third coils 1015c and 1016c are serially connected to each other so as to offset AC voltage generated from the paired third coils 1015c and 1016c, in which the AC voltage is induced to the paired third coils 1015c and 1016c from the primary coils 116a and 211 a connected to different connectors 511 and 610. One end of the paired third coils 1015c and 1016c is connected to the ground GND by way of the serial loop of the secondary coils 113b, 114b, 115b, 116b, 211b, 212b, 213b and 214b.

Furthermore, the paired third coils 1017c and 1018c are serially connected to each other so as to offset AC voltage generated from the paired third coils 1017c and 1018c, in which the AC voltage is induced to the paired third coils 1017c and 1018c from the primary coils 212a and 213a connected to different connectors 610 and 611. One end of the paired third coils 1017c and 1018c is connected to the ground GND by way of the serial loop of the secondary coils 113b, 114b, 115b, 116b, 211b, 212b, 213b and 214b.

Input terminals of the diodes 1020, 1021, 1022 and 1023 are connected to one end of the paired third coils so as to detect ripple voltage generated from the paired third coils and then produce the voltage detection value.

That is, the input terminal of the diode 1020 is connected to one end of the paired third coils 1012c and 1019, to which the AC voltage is induced from the primary coils 113a and 214a connected to different connectors 510 and 611, in order to produce the voltage detection value by detecting the ripple voltage generated from the paired third coils 1012c and 1019c.

In addition, the input terminal of the diode 1021 is connected to one end of the paired third coils 1013c and 1014c, to which the AC voltage is induced from the primary coils 114a and 115a connected to different connectors 510 and 511, in order to produce the voltage detection value by detecting the ripple voltage generated from the paired third coils 1013c and 1014c.

Further, the input terminal of the diode 1022 is connected to one end of the paired third coils 1015c and 1016c, to which the AC voltage is induced from the primary coils 116a and 211 a connected to different connectors 511 and 610, in order to produce the voltage detection value by detecting the ripple voltage generated from the paired third coils 1015c and 1016c.

Furthermore, the input terminal of the diode 1023 is connected to one end of the paired third coils 1017c and 1018c, to which the AC voltage is induced from the primary coils 212a and 213a connected to different connectors 610 and 611, in order to produce the voltage detection value by detecting the ripple voltage generated from the paired third coils 1017c and 1018c.

The fault detector 120 is connected to output terminals of the four diodes 1020, 1021, 1022 and 1023. The fault detector 120 compares the voltage detection value generated from voltage of the diodes 1020, 1021, 1022 and 1023 with the predetermined threshold value so as to detect the fault and generates the comparison result. The comparison result is output by the indicator 1 21.

### Embodiment 11

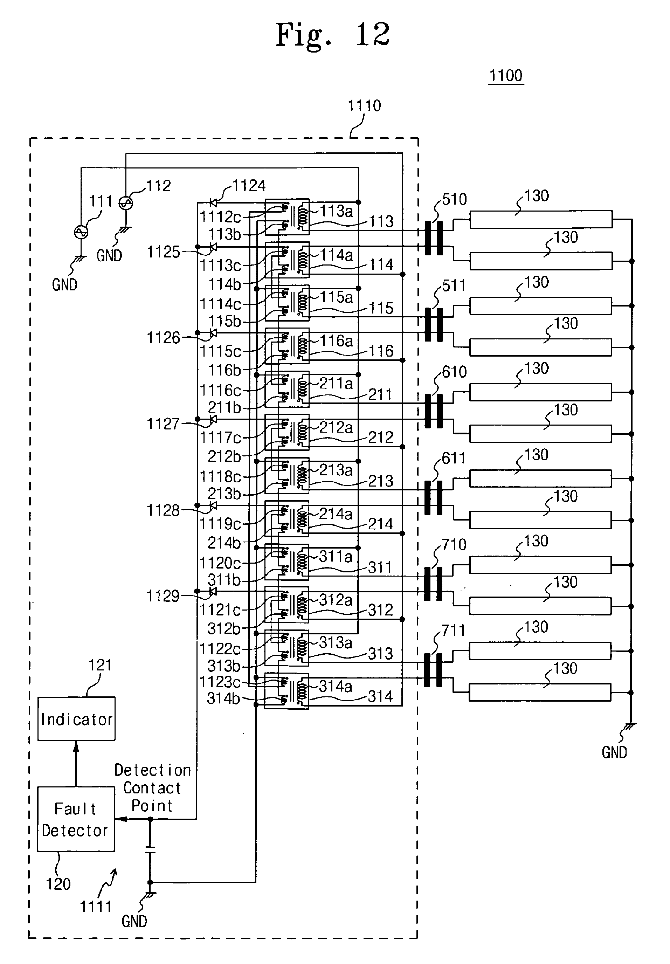

Hereinafter, an eleventh embodiment of the present invention will be described in detail with reference to accompanying drawings. FIG. 12 is a circuit diagram showing an inverter circuit and a backlight assembly according to the eleventh embodiment of the present invention. The same reference numerals will be assigned to the elements identical to the elements shown in the third and seventh embodiments, and detailed description thereof will be omitted in order to avoid redundancy.

As shown in FIG. 12, the backlight assembly 1100 according to the eleventh embodiment of the present invention includes the inverter circuit 1110, six pairs of cold cathode fluorescent lamps (discharge tubes) 130, and six lamp connectors 510, 511, 610, 611, 710 and 711.

The inverter circuit 1110 includes two inverters 111 and 112, twelve balance transformers 113, 114, 115, 116, 211, 212, 213, 214, 311, 312, 313 and 314 and a fault detection device 1111. That is, the inverter circuit 1110 according to the eleventh embodiment of the present invention is identical to the inverter circuit 310 according to the third embodiment of the present invention, except for the structure of the fault detection device 1111.

The fault detection device 1111 detects high voltage abnormal discharge in the inverter circuit 1110, such as corona discharge and arc discharge that are generated when a defect occurs in an insulator provided between a high voltage section and the ground GND. The fault detection device 1111 detects the abnormal operation based on the voltage detection values generated from voltages of the twelve balance transformers 113, 114,115,116,211,212,213,214,311,312,313 and 314.

The fault detection device 1111 includes third coils 1112c, 1113c, 1114c, 1115c, 1116c, 1117c, 1118c, 1119c, 1120c, 1121c, 1122c and 1123c added to the twelve balance transformers 113, 114, 115, 116, 211, 212, 213, 214, 311, 312, 313 and 314, six diodes 1124, 1125, 1126, 1127, 1128 and 1129, a fault detector 120 and an indicator 121. Among the third coils 1112c, 1113c, 1114c, 1115c, 1116c, 1117c, 1118c, 1119c, 1120c, 1121c, 1122c and 1123c, paired third coils to which AC voltage is induced from primary coils connected to different connectors are serially connected to each other so as to offset AC voltage generated from the paired third coils, and one end of the paired third coils is connected to the secondary coil serial loop. In addition, one end of the paired third coils can be directly connected to the ground GND, rather than being connected to the ground GND through the secondary coil serial loop.

That is, the paired third coils 1112c and 1123c are serially connected to each other so as to offset AC voltage generated from the paired third coils 1112c and 1123c, in which the AC voltage is induced to the paired third coils 1112c and 1123c from the primary coils 113a and 314a connected to different connectors 510 and 711. One end of the paired third coils 1112c and 1123c is connected to the ground GND by way of the serial loop of the secondary coils 113b, 114b, 115b, 116b, 211b, 212b, 213b, 214b, 311b, 312b, 313b and 314b.

In addition, the paired third coils 1113c and 1114c are serially connected to each other so as to offset AC voltage generated from the paired third coils 1113c and 1114c, in which the AC voltage is induced to the paired third coils 1113c and 1114c from the primary coils 114a and 115a connected to different connectors 510 and 511. One end of the paired third coils 111 3c and 1114c is connected to the ground GND by way of the serial loop of the secondary coils 113b, 114b, 115b, 116b, 211b, 212b, 213b, 214b, 311b, 312b, 313b and 314b.

Further, the paired third coils 1115c and 1116c are serially connected to each other so as to offset AC voltage generated from the paired third coils 1115c and 1116c, in which the AC voltage is induced to the paired third coils 1115c and 1116c from the primary coils 116a and 211a connected to different connectors 511 and 610. One end of the paired third coils 1115c and 1116c is connected to the ground GND by way of the serial loop of the secondary coils 113b, 114b, 115b, 116b, 211b, 212b, 213b, 214b, 311b, 312b, 313b and 314b.

Furthermore, the paired third coils 1117c and 1118c are serially connected to each other so as to offset AC voltage generated from the paired third coils 1117c and 1118c, in which the AC voltage is induced to the paired third coils 1117c and 1118c from the primary coils 21 2a and 213a connected to different connectors 610 and 611. One end of the paired third coils 1117c and 1118c is connected to the ground GND by way of the serial loop of the secondary coils 113b, 114b, 115b, 116b, 211b, 212b, 213b, 214b, 311b, 312b, 313b and 314b.

In addition, the paired third coils 1119c and 1120c are serially connected to each other so as to offset AC voltage generated from the paired third coils 1119c and 1120c, in which the AC voltage is induced to the paired third coils 1119c and 1120c from the primary coils 214a and 311a connected to different connectors 611 and 710. One end of the paired third coils 1119c and 1120c is connected to the ground GND by way of the serial loop of the secondary coils 113b, 114b, 115b, 116b, 211b, 212b, 213b, 214b, 311b, 312b, 313b and 314b.

Further, the paired third coils 1121c and 1122c are serially connected to each other so as to offset AC voltage generated from the paired third coils 1121c and 1122c, in which the AC voltage is induced to the paired third coils 1121c and 1122c from the primary coils 31 2a and 313a connected to different connectors 710 and 711. One end of the paired third coils 1121 c and 1122c is connected to the ground GND by way of the serial loop of the secondary coils 113b, 114b, 115b, 116b, 211b, 212b, 213b, 214b, 311b, 312b, 313b and 314b.

Input terminals of the diodes 1124, 1125, 1126, 1127, 1128 and 1129 are connected to one end of the paired third coils so as to detect ripple voltage generated from the paired third coils and so as to produce the voltage detection value.

That is, the input terminal of the diode 1124 is connected to one end of the paired third coils 1112c and 1123c, to which the AC voltage is induced from the primary coils 113a and 314a connected to different connectors 510 and 711, in order to produce the voltage detection value by detecting the ripple voltage generated from the paired third coils 1112c and 1123c.

In addition, the input terminal of the diode 1125 is connected to one end of the paired third coils 1113c and 1114c, to which the AC voltage is induced from the primary coils 114a and 115a connected to different connectors 510 and 511, in order to produce the voltage detection value by detecting the ripple voltage generated from the paired third coils 1113c and 1114c.

Further, the input terminal of the diode 1126 is connected to one end of the paired third coils 1115c and 1116c, to which the AC voltage is induced from the primary coils 116a and 211a connected to different connectors 511 and 610, in order to produce the voltage detection value by detecting the ripple voltage generated from the paired third coils 1115c and 1116c.

Furthermore, the input terminal of the diode 1127 is connected to one end of the paired third coils 1117c and 1118c, to which the AC voltage is induced from the primary coils 212a and 21 3a connected to different connectors 610 and 611, in order to produce the voltage detection value by detecting the ripple voltage generated from the paired third coils 1117c and 1118c.

The input terminal of the diode 1128 is connected to one end of the paired third coils 1119c and 1120c, to which the AC voltage is induced from the primary coils 214a and 311a connected to different connectors 611 and 710, in order to produce the voltage detection value by detecting the ripple voltage generated from the paired third coils 1119c and 1120c.

In addition, the input terminal of the diode 1129 is connected to one end of the paired third coils 1121c and 1122c, to which the AC voltage is induced from the primary coils 312a and 313a connected to different connectors 710 and 711, in order to produce the voltage detection value by detecting the ripple voltage generated from the paired third coils 1121c and 1122c.

The fault detector 120 is connected to output terminals of the six diodes 1124, 1125, 1126, 1127, 1128 and 1129. The fault detector 120 compares the voltage detection value generated from voltage of the diodes 1124, 1125, 1126, 1127, 1128 and 1129 with the predetermined threshold value so as to detect the fault and generates the comparison result. The comparison result is output by the indicator 121.

### Embodiment 12

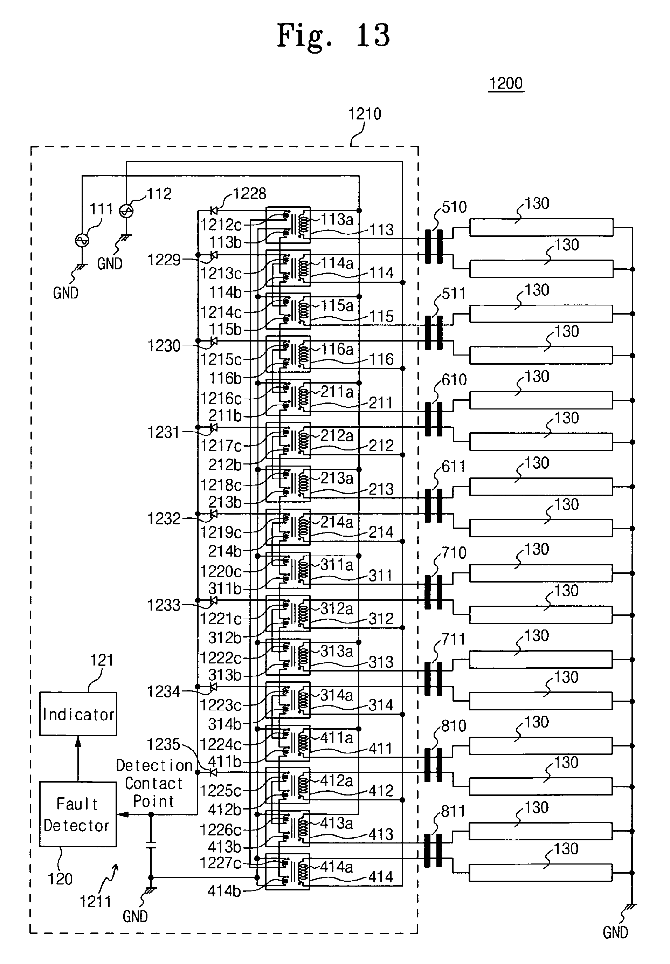

Hereinafter, a twelfth embodiment of the present invention will be described in detail with reference to accompanying drawings. FIG. 13 is a circuit diagram showing an inverter circuit and a backlight assembly according to the twelfth embodiment of the present invention. The same reference numerals will be assigned to the elements identical to the elements shown in the fourth and eighth embodiments, and detailed description thereof will be omitted in order to avoid redundancy.

As shown in FIG. 13, the backlight assembly 1100 according to the twelfth embodiment of the present invention includes the inverter circuit 1210, eight pairs of cold cathode fluorescent lamps (discharge tubes) 130, and eight lamp connectors 510, 511, 610, 611, 710, 711, 810 and 811.

The inverter circuit 1210 includes two inverters 111 and 112, sixteen balance transformers 113, 114, 115, 116, 211, 212, 213, 214, 311, 312, 313, 314, 411, 412, 413 and 414, and a fault detection device 1211. That is, the inverter circuit 1210 according to the twelfth embodiment of the present invention is identical to the inverter circuit 410 according to the fourth embodiment of the present invention, except for the structure of the fault detection device 1211.

The fault detection device 1211 detects high voltage abnormal discharge in the inverter circuit 1210, such as corona discharge and arc discharge, which are generated when a defect occurs in an insulator provided between a high voltage section and the ground GND. The fault detection device 1211 detects the abnormal operation based on the voltage detection values of voltages generated from the sixteen balance transformers 113, 114, 115, 116, 211, 212, 213, 214, 311, 312, 313, 314, 411, 412, 413, and 414.

The fault detection device 1211 includes third coils 1212c, 1213c, 1214c, 1215c, 1216c, 1217c, 1218c, 1219c, 1220c, 1221c, 1222c, 1223c, 1224c, 1225c, 1226c and 1227c added to the sixteen balance transformers 1113, 114, 115, 116, 211, 212, 213, 214, 311, 312, 313, 314, 411, 412, 413 and 414, eight diodes 1228, 1229, 1230, 1231, 1232, 1233, 1234 and 1235, a fault detector 120 and an indicator 121.

Among the third coils 1212c, 1213c, 1214c, 1215c, 1216c, 1217c, 1218c, 1219c, 1220c, 1221 c, 1222c, 1223c, 1224c, 1225c, 1226c and 1227c, paired third coils to which AC voltage is induced from primary coils connected to different connectors are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 1212c and 1227c are serially connected to each other so as to offset AC voltage generated from the paired third coils 1212c and 1227c, in which the AC voltage is induced to the paired third coils 1212c and 1227c from the primary coils 113a and 414a connected to different connectors 510 and 811. One end of the paired third coils 1212c and 1227c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The paired third coils 1213c and 1214c are serially connected to each other so as to offset AC voltage generated from the paired third coils 1213c and 1214c, in which the AC voltage is induced to the paired third coils 1213c and 1214c from the primary coils 114a and 115a connected to different connectors 510 and 511. One end of the paired third coils 1213c and 1214c is connected to the ground GND by way of the serial loop of the secondary coils 113b, 114b, 115b, 116b, 211b, 212b, 21 3b, 214b, 311b, 312b, 313b, 314b, 411b, 412b, 413b and 414b.

The paired third coils 1215c and 1216c are serially connected to each other so as to offset AC voltage generated from the paired third coils 1215c and 1216c, in which the AC voltage is induced to the paired third coils 1215c and 1216c from the primary coils 116a and 211a connected to different connectors 511 and 610. One end of the paired third coils 1215c and 1216c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The paired third coils 1217c and 1218c are serially connected to each other so as to offset AC voltage generated from the paired third coils 1217c and 1218c, in which the AC voltage is induced to the paired third coils 1217c and 1218c from the primary coils 212a and 213a connected to different connectors 610 and 611. One end of the paired third coils 1217c and 1218c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The paired third coils 1219c and 1220c are serially connected to each other so as to offset AC voltage generated from the paired third coils 1219c and 1220c, in which the AC voltage is induced to the paired third coils 1219c and 1220c from the primary coils 214a and 311a connected to different connectors 611 and 710. One end of the paired third coils 1219c and 1220c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The paired third coils 1221c and 1222c are serially connected to each other so as to offset AC voltage generated from the paired third coils 1221c and 1222c, in which the AC voltage is induced to the paired third coils 1221c and 1222c from the primary coils 312a and 313a connected to different connectors 710 and 711. One end of the paired third coils 1221c and 1222c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The paired third coils 1223c and 1224c are serially connected to each other so as to offset AC voltage generated from the paired third coils 1223c and 1224c, in which the AC voltage is induced to the paired third coils 1223c and 1224c from the primary coils 314a and 411a connected to different connectors 711 and 810. One end of the paired third coils 1223c and 1224c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The paired third coils 1225c and 1226c are serially connected to each other so as to offset AC voltage generated from the paired third coils 1225c and 1226c, in which the AC voltage is induced to the paired third coils 1225c and 1226c from the primary coils 412a and 413a connected to different connectors 810 and 811. One end of the paired third coils 1225c and 1226c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

Input terminals of the diodes 1228, 1229, 1230, 1231, 1232, 1233, 1234 and 1235 are connected to one end of the paired third coils so as to detect ripple voltage generated from the paired third coils and then produce the voltage detection value.

That is, the input terminal of the diode 1228 is connected to one end of the paired third coils 1212c and 1227c, to which the AC voltage is induced from the primary coils 113a and 414a connected to different connectors 510 and 811, in order to produce the voltage detection value by detecting the ripple voltage generated from the paired third coils 1212c and 1227c.

The input terminal of the diode 1229 is connected to one end of the paired third coils 1213c and 1214c, to which the AC voltage is induced from the primary coils 114a and 115a connected to different connectors 510 and 511, in order to produce the voltage detection value by detecting the ripple voltage generated from the paired third coils 1213c and 1214c.

The input terminal of the diode 1230 is connected to one end of the paired third coils 1215c and 1216c, to which the AC voltage is induced from the primary coils 116a and 211a connected to different connectors 511 and 610, in order to produce the voltage detection value by detecting the ripple voltage generated from the paired third coils 1215c and 1216c.

The input terminal of the diode 1231 is connected to one end of the paired third coils 1217c and 1218c, to which the AC voltage is induced from the primary coils 212a and 213a connected to different connectors 610 and 611, in order to produce the voltage detection value by detecting the ripple voltage generated from the paired third coils 1217c and 1218c.

The input terminal of the diode 1232 is connected to one end of the paired third coils 1219c and 1220c, to which the AC voltage is induced from the primary coils 214a and 311 a connected to different connectors 611 and 710, in order to produce the voltage detection value by detecting the ripple voltage generated from the paired third coils 1219c and 1220c.

The input terminal of the diode 1233 is connected to one end of the paired third coils 1221c and 1222c, to which the AC voltage is induced from the primary coils 312a and 313a connected to different connectors 710 and 711, in order to produce the voltage detection value by detecting the ripple voltage generated from the paired third coils 1221c and 1222c.

The input terminal of the diode 1234 is connected to one end of the paired third coils 1223c and 1224c, to which the AC voltage is induced from the primary coils 314a and 411 a connected to different connectors 711 and 810, in order to produce the voltage detection value by detecting the ripple voltage generated from the paired third coils 1 223c and 1224c.

The input terminal of the diode 1235 is connected to one end of the paired third coils 1225c and 1226c, to which the AC voltage is induced from the primary coils 412a and 413a connected to different connectors 810 and 811, in order to produce the voltage detection value by detecting the ripple voltage generated from the paired third coils 1225c and 1226c.

The fault detector 120 is connected to output terminals of the eight diodes 1228, 1229, 1230, 1231, 1232, 1233, 1234 and 1235. The fault detector 120 compares the voltage detection value generated from voltage of the diodes 1228, 1229, 1230, 1231, 1232, 1233, 1234 and 1235 with the predetermined threshold value so as to detect the fault and generates the comparison result. The comparison result is output by the indicator 121.

### Embodiment 13

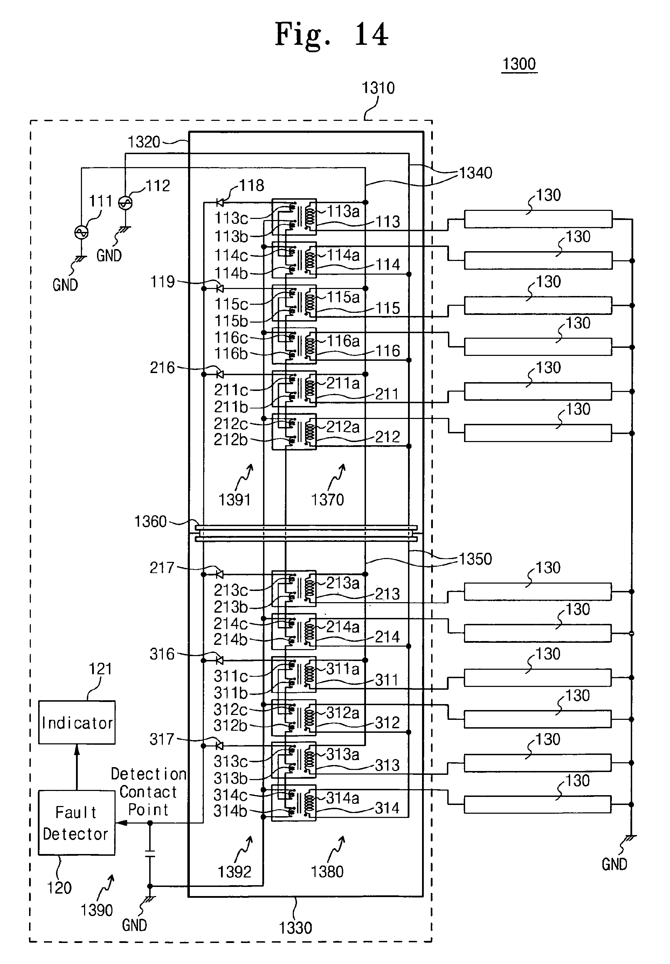

Hereinafter, a thirteenth embodiment of the present invention will be described in detail with reference to accompanying drawings. FIG. 14 is a circuit diagram showing an inverter circuit and a backlight assembly according to the thirteenth embodiment of the present invention. The same reference numerals will be assigned to the elements identical to the elements shown in the third embodiment, and detailed description thereof will be omitted in order to avoid redundancy.

As shown in FIG. 14, the backlight assembly 1300 according to the thirteenth embodiment of the present invention includes the inverter circuit 1310, and six pairs of cold cathode fluorescent lamps (discharge tubes) 130.

The inverter circuit 1310 includes two inverters 111 and 112, a first substrate 1320, a second substrate 1330, a first power supply line 1340 mounted on the first substrate 1320, a second power supply line 1350 mounted on the second substrate 1330, a connector 1360 that interconnects the substrates, first group balance transformers 1370 mounted on the first substrate 1320, second group balance transforms 1380 mounted on the second substrate 1330, and a fault detection device 1390.

The first power supply line 1340 is connected to output terminals of the inverters 111 and 112 and input terminals of the first group balance transformers 1370. The first group balance transformers 1370 are connected to three pairs of cold cathode fluorescent lamps 130. In addition, the inverters 111 and 112 provide power to the three pairs of cold cathode fluorescent lamps 130 through the first power supply line 1340 and the first group balance transformers 1370.

The second power supply line 1350 is connected to output terminals of the inverters 111 and 112 and input terminals of the second group balance transformers 1380. The second group balance transformers 1380 are connected to three pairs of cold cathode fluorescent lamps 130. In addition, the inverters 111 and 112 provide power to the three pairs of cold cathode fluorescent lamps 130 through the second power supply line 1350 and the second group balance transformers 1380.

The connector 1360 electrically connects the first power supply line 1340 to the second power supply line 1350. In addition, the connector 1360 electrically connects the first group balance transformers 1370 to the second group balance transformers 1380. Further, the connector 1360 electrically connects a first fault detection unit 1391 of the fault detection device 1390 to a second fault detection unit 1392 of the fault detection device 1390.

The first group balance transformers 1370 include six balance transformers 113, 114, 115, 116, 211 and 212. The six balance transformers 113, 114, 115, 116, 211 and 212 have primary coils 113a, 114a, 115a, 116a, 211a and 212a, which are connected between the first power supply line 1340 and three pairs of cold cathode fluorescent lamps 130, respectively. The six balance transformers 113, 114, 11 5, 116, 211 and 212 have secondary coils 113b, 114b, 115b, 116b, 211 band 212b, to which AC voltage is induced from the primary coils 113a, 114a, 115a, 116a, 211a and 212a, respectively. Among the secondary coils 113b, 114b, 115b, 116b, 211b and 212b, adjacent secondary coils are serially connected to each other.

The second group balance transformers 1380 include six balance transformers 213, 214, 311, 312, 313 and 314. The six balance transformers 213, 214, 311, 312, 313 and 314 have primary coils 213a, 214a, 311a, 312a, 313a and 314a, which are connected between the second power supply line 1350 and three pairs of cold cathode fluorescent lamps 130, respectively. The six balance transformers 213, 214, 311, 312, 313 and 314 have secondary coils 213b, 214b, 311b, 312b, 313b and 314b, to which AC voltage is induced from the primary coils 213a, 214a, 311a, 312a, 313a and 314a, respectively. Among the secondary coils 213b, 214b, 311b, 312b, 313b and 314b, adjacent secondary coils are serially connected to each other.

In addition, the secondary coils of the first and second group balance transformers 1370 and 1380 are connected to the connector 1360 to form the secondary coil serial loop. A part of the secondary coil serial loop is connected to the ground GND. That is, six secondary coils 113b, 114b, 115b, 116b, 211b and 212b of the first group balance transformers 1370 are connected to the connector 1360 so as to form the secondary coil serial loop together with the six secondary coils 213b, 214b, 311b, 312b, 31 3b and 314b of the second group balance transformers 1380, and the second coil serial loop is partially connected to the ground GND.

The fault detection device 1390 detects high voltage abnormal discharge in the inverter circuit 1310, such as corona discharge and arc discharge, which are generated when a defect occurs in an insulator provided between a high voltage section and the ground GND. The fault detection device 1390 detects the abnormal operation based on the voltage detection values generated from voltages of the first and second group balance transformers 1370 and 1380.

The fault detection device 1390 includes the first fault detection unit 1391, the second fault detection unit 1392, a fault detector 120 and an indicator 121.

The first fault detection unit 1391 includes three pairs of third coils 113c, 114c, 115c, 116c, 211c, and 212c and three diodes 118, 119 and 216.

Among the third coils 113c, 114c, 115c, 116c, 211c, and 212c of the first fault detection unit 1391, adjacent third coils, which are aligned as a pair, are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 113c and 114c adjacent to each other are serially connected to each other so as to offset AC voltage generated from the paired third coils 113c and 114c, and one end of the paired third coils 113c and 114c is connected to the ground GND by way of the serial loop of the secondary coils 113b, 114b, 115b, 116b, 211b, 212b, 213b, 214b, 311b, 312b, 313b and 314b.

In addition, the paired third coils 115c and 116c adjacent to each other are serially connected to each other so as to offset AC voltage generated from the paired third coils 115c and 116c, and one end of the paired third coils 115c and 116c is connected to the ground GND by way of the serial loop of the secondary coils 113b, 114b, 115b, 116b, 211b, 212b, 213b, 214b, 311b, 312b, 313b and 314b.

Further, the paired third coils 211c and 212c adjacent to each other are serially connected to each other so as to offset AC voltage generated from the paired third coils 211c and 212c, and one end of the paired third coils 211c and 212c is connected to the ground GND by way of the serial loop of the secondary coils 113b, 114b, 115b, 116b, 211b, 212b, 213b, 214b, 311b, 312b, 313b and 314b.

The second fault detection unit 1392 includes three pairs of third coils 213c, 214c, 311c, 312c, 31 3c, and 314c and three diodes 217, 316 and 317.

Among the third coils 213c, 214c, 311c, 312c, 313c, and 314c of the second fault detection unit 1392, paired third coils adjacent to each other are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 213c and 214c adjacent to each other are serially connected to each other so as to offset AC voltage generated from the paired third coils 213c and 214c, and one end of the paired third coils 213c and 214c is connected to the ground GND by way of the serial loop of the secondary coils 113b, 114b, 115b, 116b, 211b, 212b, 213b, 214b, 311b, 312b, 313b and 314b.

In addition, the paired third coils 311c and 312c adjacent to each other are serially connected to each other so as to offset AC voltage generated from the paired third coils 311c and 312c, and one end of the paired third coils 311c and 312c is connected to the ground GND by way of the serial loop of the secondary coils 113b, 114b, 115b, 116b, 211b, 212b, 213b, 214b, 311b, 312b, 313b and 314b.

Further, the paired third coils 313c and 314c adjacent to each other are serially connected to each other so as to offset AC voltage generated from the paired third coils 313c and 314c, and one end of the paired third coils 313c and 314c is connected to the ground GND by way of the serial loop of the secondary coils 113b, 114b, 115b, 116b, 211b, 212b, 213b, 214b, 311b, 312b, 313b and 314b.

In this manner, the third coils of the first fault detection unit 1391 are connected to the third coils of the second fault detection unit 1392 by means of the connector 1360, and one end of the third coils of the first and second fault detection units 1391 and 1392 can be connected to the ground through the secondary coil serial loop.

Input terminals of the diodes 118, 119 and 216 of the first fault detection unit 1391 are connected to one end of the paired third coils so as to detect ripple voltage generated from the paired third coils and then produce the voltage detection value.

That is, the input terminal of the diode 118 is connected to one end of the paired third coils 113c and 114c in order to produce the voltage detection value by detecting the ripple voltage generated from the paired third coils 113c and 114c.

The input terminal of the diode 119 is connected to the paired third coils 115c and 116c in order to produce the voltage detection value by detecting the ripple voltage generated from the paired third coils 115c and 116c.

The input terminal of the diode 216 is connected to the paired third coils 211c and 212c in order to produce the voltage detection value by detecting the ripple voltage generated from the paired third coils 211c and 212c.

In addition, input terminals of the diodes 217, 316 and 317 of the second fault detection unit 1392 are connected to one end of the paired third coils so as to detect ripple voltage generated from the paired third coils and then produce the voltage detection value.

That is, the input terminal of the diode 217 is connected to one end of the paired third coils 213c and 214c in order to produce the voltage detection value by detecting the ripple voltage generated from the paired third coils 213c and 214c.

The input terminal of the diode 316 is connected to the paired third coils 311c and 312c in order to produce the voltage detection value by detecting the ripple voltage generated from the paired third coils 311c and 312c.

The input terminal of the diode 317 is connected to the paired third coils 313c and 314c in order to produce the voltage detection value by detecting the ripple voltage generated from the paired third coils 313c and 314c.

The fault detector 120 is connected to output terminals of the diodes 118, 119 and 216 of the first fault detection unit 1391 and output terminals of the diodes 217, 316 and 317 of the second fault detection unit 1392. The fault detector 120 compares the voltage detection value generated from voltage of the diodes 118, 119, 216, 217, 316 and 317 with the predetermined threshold value so as to detect the fault and generates the comparison result. As described above, according to the thirteenth embodiment of the present invention, the connector for interconnecting the substrates electrically connects the first and second power supply lines, the first and second substrates, the first and second group balance transforms and the first and second fault detection units. In addition, among the plural third coils of each fault detection unit, the paired third coils adjacent to each other are serially connected to each other through the connector so as to offset the AC voltage generated from the paired third coils and one end of the paired third coils is connected to input terminals of the plural diodes. Thus, according to the thirteenth embodiment of the present invention, the backlight assembly can be fabricated in a large size without increasing the number of connector terminals interposed between substrates. Further, according to the thirteenth embodiment of the present invention, even if the number of the cold cathode fluorescent lamps increases due to the large-size backlight assembly, since the paired third coils adjacent to each other are serially connected to each other in each substrate so as to offset the AC voltage generated from the paired third coils, the abnormal operation of the backlight assembly can be more precisely detected.

### Embodiment 14

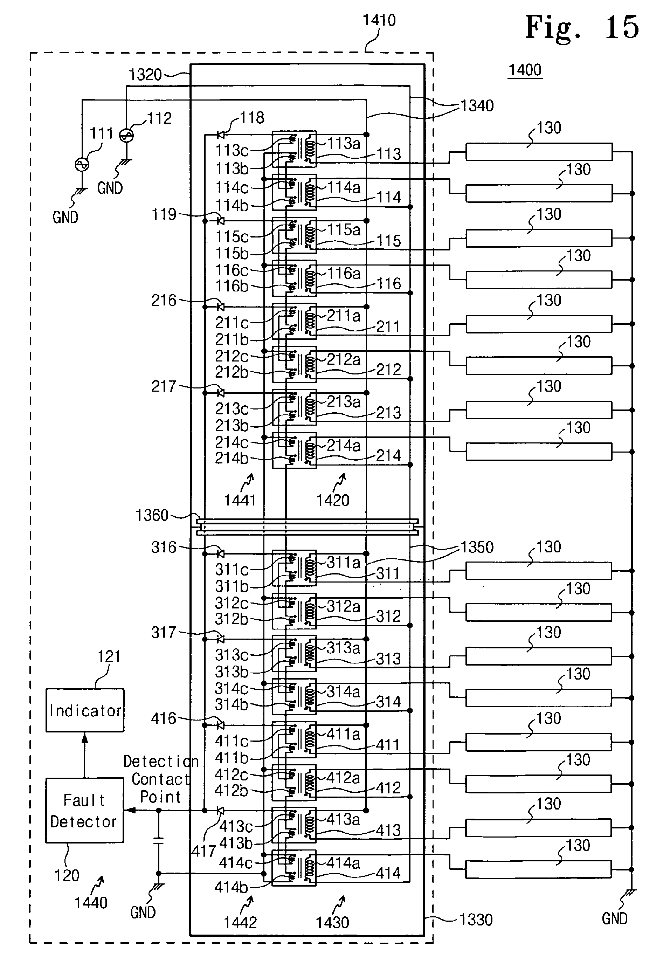

Hereinafter, a fourteenth embodiment of the present invention will be described in detail with reference to accompanying drawings. FIG. 15 is a circuit diagram showing an inverter circuit and a backlight assembly according to the fourteenth embodiment of the present invention. The same reference numerals will be assigned to the elements identical to the elements shown in the fourth and thirteenth embodiments, and detailed description thereof will be omitted in order to avoid redundancy.

As shown in FIG. 15, the backlight assembly 1400 according to the fourteenth embodiment of the present invention includes the inverter circuit 1410, and eight pairs of cold cathode fluorescent lamps (discharge tubes) 130.

The inverter circuit 1410 includes two inverters 111 and 112, a first substrate 1320, a second substrate 1330, a first power supply line 1340 mounted on the first substrate 1 320, a second power supply line 1350 mounted on the second substrate 1330, a connector 1360 that interconnects the substrates, first group balance transformers 1420 mounted on the first substrate 1320, second group balance transforms 1430 mounted on the second substrate 1330, and a fault detection device 1440. That is, the inverter circuit 1410 according to the fourteenth embodiment of the present invention is identical to the inverter circuit 1310 according to the thirteenth embodiment of the present invention, except for the structure of the first and second group balance transformers 1420 and 1430 and the fault detection device 1440.

The connector 1360 electrically connects the first group balance transformers 1420 to the second group balance transformers 1430. In addition, the connector 1360 electrically connects a first fault detection unit 1441 of the fault detection device 1440 to a second fault detection unit 1442 of the fault detection device 1440.

The first group balance transformers 1420 include eight balance transformers 113, 114, 115, 116, 211, 212, 213 and 214. That is, the first group balance transformers 1420 according to the fourteenth embodiment of the present invention further include two balance transformers 213 and 214 of the second group balance transformers 1380 according to the thirteenth embodiment of the present invention.

The two balance transformers 213 and 214 include primary coils 213a and 214a, which are connected between the first power supply line 1340 and a pair of cold cathode fluorescent lamps 130, respectively. In addition, the balance transformers 213 and 214 have secondary coils 213b and 214b, to which AC voltage is induced from the primary coils 21 3a and 214a. The secondary coils 213b and 214b are serially connected to each other.

The second group balance transformers 1430 include eight balance transformers 311, 312, 313, 314, 411, 412, 41 3 and 414. That is, the second group balance transformers 1430 according to the fourteenth embodiment of the present invention have no two balance transformers 213 and 214 and further include four balance transformers 411, 412, 413 and 414 as compared with the second group balance transformers 1380 according to the thirteenth embodiment of the present invention.

The four balance transformers 411, 412, 413 and 414 include primary coils 411a, 412a, 413a and 414a, which are connected between the second power supply line 1350 and two pairs of cold cathode fluorescent lamps 130, respectively. In addition, the four balance transformers 411, 412, 413 and 414 have secondary coils 411b, 412b, 413b and 414b, to which AC voltage is induced from the primary coils 411a, 412a, 413a and 414a. Among the secondary coils 411b, 412b, 413b and 414b, adjacent secondary coils are serially connected to each other.

In addition, sixteen secondary coils of the first and second balance transformers 1420 and 1430 are connected to the connector 1360 to form the serial loop of the secondary coils. A part of the secondary coil serial loop is connected to the ground GND. That is, eight secondary coils 113b, 114b, 115b, 116b, 211b, 212b, 213b and 214b of the first group balance transformers 1420 are connected to the connector 1360 so as to form the secondary coil serial loop together with the eight secondary coils 311b, 312b, 313b, 314b, 411b, 412b, 413b and 414b of the second group balance transformers 1430, and the second coil serial loop is partially connected to the ground GND.

The fault detection device 1440 detects high voltage abnormal discharge in the inverter circuit 1410, such as corona discharge and arc discharge, which are generated when a defect occurs in an insulator provided between a high voltage section and the ground GND. The fault detection device 1440 detects the abnormal operation based on the voltage detection values generated from voltages of the first and second group balance transformers 1420 and 1430.

The fault detection device 1440 includes the first fault detection unit 1441, the second fault detection unit 1442, a fault detector 120 and an indicator 121.

The first fault detection unit 1441 includes four pairs of third coils 113c, 114c, 115c, 116c, 211c, 212c, 213c and 214c and four diodes 118, 119, 216 and 217. That is, the first fault detection unit 1441 further includes a pair of third coils 213c and 214c and the diode 217 of the second fault detection unit 1392 according to the thirteenth embodiment of the present invention.

Among the third coils 113c, 114c, 115c, 116c, 211c, 212c, 213c and 214c of the first fault detection unit 1441, adjacent third coils, which are aligned as a pair, are serially connected to each other so as to offset AC voltage generated from the paired third coils, and one end of the paired third coils is connected to the serial loop of the secondary coils 113b, 114b, 115b, 116b, 211b, 212b, 213b, 214b, 311b, 312b, 313b, 314b, 411b, 412b, 413b and 414b. In addition, one end of the paired third coils can be directly connected to the ground GND, other than connected to the ground GND through the secondary coil serial loop.

That is, the paired third coils 213c and 214c adjacent to each other are serially connected to each other so as to offset AC voltage generated from the paired third coils 213c and 214c, and one end of the paired third coils 213c and 214c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The second fault detection unit 1442 includes four pairs of third coils 311c, 312c, 313c, 314c, 411c, 412c, 413c and 414c and four diodes 316, 317, 416 and 417. That is, the second fault detection unit 1442 according to the fourteenth embodiment of the present invention has no third coils 213c and 214c, and further includes two pairs of third coils 411c, 412c, 413c and 414c as compared with the second fault detection unit 1392 according to the thirteenth embodiment of the present invention. In addition, the second fault detection unit 1442 according to the fourteenth embodiment of the present invention has no diode 217, and further includes two diodes 416 and 417 as compared with the second fault detection unit 1392 according to the thirteenth embodiment of the present invention.

Among the third coils 311c, 312c, 313c, 314c, 411c, 412c, 413c and 414c of the second fault detection unit 1442, adjacent third coils, which are aligned as a pair, are serially connected to each other so as to offset AC voltage generated from the paired third coils, and one end of the paired third coils is connected to the serial loop of the secondary coils 113b, 114b, 115b, 116b, 211b, 212b, 213b, 214b, 311b, 312b, 313b, 314b, 411b, 412b, 413b and 414b. In addition, one end of the paired third coils can be directly connected to the ground GND, other than connected to the ground GND through the secondary coil serial loop.

That is, the paired third coils 411c and 412c adjacent to each other are serially connected to each other so as to offset AC voltage generated from the paired third coils 411c and 412c, and one end of the paired third coils 411c and 412c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

In addition, the paired third coils 413c and 414c adjacent to each other are serially connected to each other so as to offset AC voltage generated from the paired third coils 413c and 414c, and one end of the paired third coils 411c and 412c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

In this manner, the third coils of the first fault detection unit 1441 are connected to the third coils of the second fault detection unit 1442 by means of the connector 1360, and one end of the third coils of the first and second fault detection units 1441 and 1442 can be connected to the ground through the secondary coil serial loop.

Input terminals of the four diodes 118, 119, 216 and 217 of the first fault detection unit 1441 are connected to one end of the paired third coils so as to detect ripple voltage generated from the paired third coils and then produce the voltage detection value.

That is, the input terminal of the diode 217 is connected to one end of the paired third coils 213c and 214c in order to produce the voltage detection value by detecting the ripple voltage generated from the paired third coils 213c and 214c.

In addition, input terminals of the diodes 316, 317, 416 and 417 of the second fault detection unit 1442 are connected to one end of the paired third coils so as to detect ripple voltage generated from the paired third coils and then produce the voltage detection value.

That is, the input terminal of the diode 416 is connected to one end of the paired third coils 411c and 412c in order to produce the voltage detection value by detecting the ripple voltage generated from the paired third coils 411c and 412c.

In addition, the input terminal of the diode 417 is connected to the paired third coils 413c and 414c in order to produce the voltage detection value by detecting the ripple voltage generated from the paired third coils 413c and 414c.

The fault detector 120 is connected to output terminals of the diodes 118, 119 216 and 217 of the first fault detection unit 1441 and output terminals of the diodes 316, 317, 416 and 417 of the second fault detection unit 1442. The fault detector 120 compares the voltage detection value generated from voltage of the eight diodes 118, 119, 216, 217, 316, 317, 416 and 417 with the predetermined threshold value so as to detect the fault and generates the comparison result.

### Embodiment 15

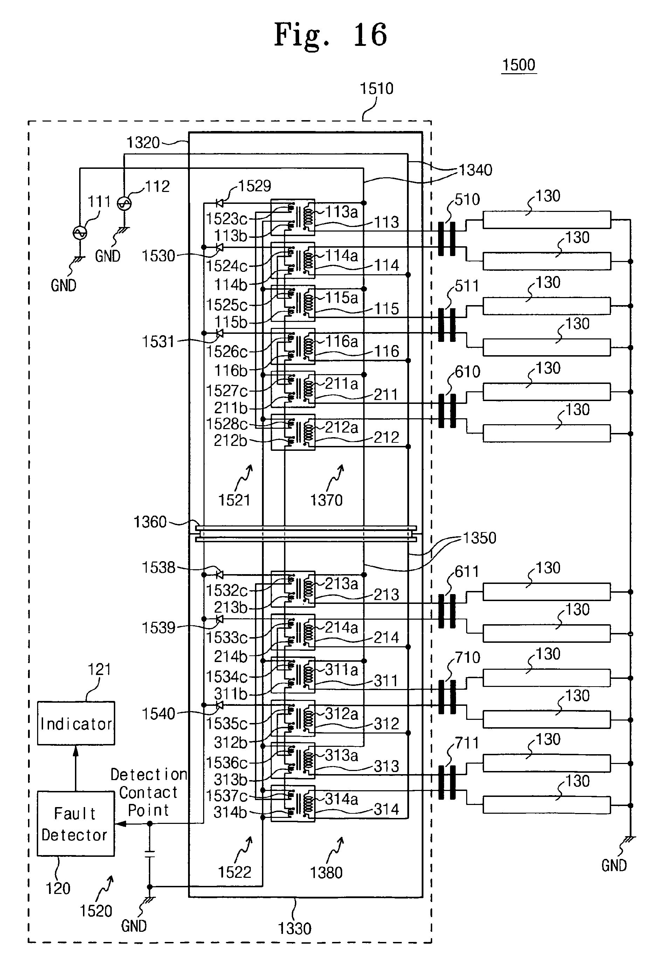

Hereinafter, a fifteenth embodiment of the present invention will be described in detail with reference to accompanying drawings. FIG. 16 is a circuit diagram showing an inverter circuit and a backlight assembly according to the fifteenth embodiment of the present invention. The same reference numerals will be assigned to the elements identical to the elements shown in the eleventh and thirteenth embodiments, and detailed description thereof will be omitted in order to avoid redundancy.

As shown in FIG. 16, the backlight assembly 1500 according to the fifteenth embodiment of the present invention includes the inverter circuit 1510, six pairs of cold cathode fluorescent lamps (discharge tubes) 130, and six connectors 510, 511, 610, 611, 710 and 711.

The inverter circuit 1510 includes two inverters 111 and 112, a first substrate 1320, a second substrate 1330, a first power supply line 1340 mounted on the first substrate 1320, a second power supply line 1350 mounted on the second substrate 1330, a connector 1360 that interconnects the substrates, first group balance transformers 1370 mounted on the first substrate 1320, second group balance transforms 1380 mounted on the second substrate 1330, and a fault detection device 1520. That is, the inverter circuit 1510 according to the fifteenth embodiment of the present invention is identical to the inverter circuit 1310 according to the thirteenth embodiment of the present invention, except for the structure of the fault detection device 1520.

The fault detection device 1520 detects high voltage abnormal discharge in the inverter circuit 1510, such as corona discharge and arc discharge, which are generated when a defect occurs in an insulator provided between a high voltage section and the ground GND. The fault detection device 1520 detects the abnormal operation based on the voltage detection values generated from voltages of the first and second group balance transformers 1370 and 1380.

The fault detection device 1520 includes a first fault detection unit 1521, a second fault detection unit 1522, a fault detector 120 and an indicator 121. The first fault detection unit 1521 is electrically connected to the second fault detection unit 1522 through the connector 1360.

The first fault detection unit 1521 includes three pairs of third coils 1523c, 1524c, 1525c, 1526c, 1527c, and 1528c and three diodes 1529, 1530 and 1531.

Among the third coils 1523c, 1524c, 1525c, 1526c, 1527c, and 1528c of the first fault detection unit 1521, paired third coils, to which the AC voltage is induced from the primary coils connected to different connectors, are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 1523c and 1528c are serially connected to each other so as to offset AC voltage generated from the paired third coils 1523c and 1528c, in which the AC voltage is induced to the paired third coils 1523c and 1528c from the primary coils 113a and 212a connected to different connectors 510 and 610, respectively. In addition, one end of the paired third coils 1523c and 1528c is connected to the ground GND by way of the serial loop of the secondary coils 113b, 114b, 115b, 116b, 211b, 212b, 213b, 214b, 311b, 312b, 313b and 314b.

In addition, the paired third coils 1524c and 1525c are serially connected to each other so as to offset AC voltage generated from the paired third coils 1524c and 1525c, in which the AC voltage is induced to the paired third coils 1524c and 1528c from the primary coils 114a and 115a connected to different connectors 510 and 511, respectively. In addition, one end of the paired third coils 1524c and 1525c is connected to the ground GND by way of the serial loop of the secondary coils 113b, 114b, 115b, 116b, 211b, 212b, 213b, 214b, 311b, 312b, 313b and 314b.

Further, the paired third coils 1526c and 1527c are serially connected to each other so as to offset AC voltage generated from the paired third coils 1526c and 1527c, in which the AC voltage is induced to the paired third coils 1526c and 1527c from the primary coils 116a and 211a connected to different connectors 511 and 610, respectively. In addition, one end of the paired third coils 1526c and 1527c is connected to the ground GND by way of the serial loop of the secondary coils 113b, 114b, 115b, 116b, 211b, 212b, 213b, 214b, 311b, 312b, 313b and 314b.

The second fault detection unit 1522 includes three pairs of third coils 1532c, 1533c, 1534c, 1535c, 1536c, and 1537c and three diodes 1538, 1539 and 1540.

Among the third coils 1532c, 1533c, 1534c, 1535c, 1536c, and 1537c of the second fault detection unit 1522, paired third coils, to which the AC voltage is induced from the primary coils connected to different connectors, are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 1532c and 1537c are serially connected to each other so as to offset AC voltage generated from the paired third coils 1532c and 1537c, in which the AC voltage is induced to the paired third coils 1532c and 1537c from the primary coils 213a and 314a connected to different connectors 611 and 711, respectively. In addition, one end of the paired third coils 1532c and 1537c is connected to the ground GND by way of the serial loop of the secondary coils 113b, 114b, 115b, 116b, 211b, 212b, 213b, 214b, 311b, 312b, 313b and 314b.

In addition, the paired third coils 1533c and 1534c are serially connected to each other so as to offset AC voltage generated from the paired third coils 1533c and 1534c, in which the AC voltage is induced to the paired third coils 1533c and 1534c from the primary coils 214a and 311a connected to different connectors 611 and 710, respectively. In addition, one end of the paired third coils 1533c and 1534c is connected to the ground GND by way of the serial loop of the secondary coils 113b, 114b, 115b, 116b, 211b, 212b, 213b, 214b, 311b, 312b, 313b and 314b.

Further, the paired third coils 1535c and 1536c are serially connected to each other so as to offset AC voltage generated from the paired third coils 1535c and 1536c, in which the AC voltage is induced to the paired third coils 1535c and 1536c from the primary coils 312a and 313a connected to different connectors 710 and 711, respectively. In addition, one end of the paired third coils 1535c and 1536c is connected to the ground GND by way of the serial loop of the secondary coils 113b, 114b, 115b, 116b, 211b, 212b, 213b, 214b, 311b, 312b, 313b and 314b.

In this manner, the third coils of the first fault detection unit 1521 are connected to the third coils of the second fault detection unit 1522 by means of the connector 1360, and one end of the third coils of the first and second fault detection units 1521 and 1522 can be connected to the ground through the secondary coil serial loop.

Input terminals of the three diodes 1529, 1530 and 1531 of the first fault detection unit 1521 are connected to one end of the paired third coils so as to detect ripple voltage generated from the paired third coils and then produce the voltage detection value.

That is, the input terminal of the diode 1529 is connected to one end of the paired third coils 1523c and 1528c, to which the AC voltage is induced from the primary coils 113a and 212a connected to different connectors 510 and 610, in order to produce the voltage detection value by detecting the ripple voltage generated from the paired third coils 1523c and 1528c.

In addition, the input terminal of the diode 1530 is connected to one end of the paired third coils 1524c and 1525c, to which the AC voltage is induced from the primary coils 114a and 115a connected to different connectors 510 and 511, in order to produce the voltage detection value by detecting the ripple voltage generated from the paired third coils 1524c and 1525c.

Further, the input terminal of the diode 1 531 is connected to one end of the paired third coils 1526c and 1527c, to which the AC voltage is induced from the primary coils 116a and 211a connected to different connectors 511 and 610, in order to produce the voltage detection value by detecting the ripple voltage generated from the paired third coils 1526c and 1527c.

Input terminals of the three diodes 1538, 1539 and 1540 of the second fault detection unit 1522 are connected to one end of the paired third coils so as to detect ripple voltage generated from the paired third coils and then produce the voltage detection value.

That is, the input terminal of the diode 1538 is connected to one end of the paired third coils 1532c and 1537c, to which the AC voltage is induced from the primary coils 213a and 314a connected to different connectors 611 and 711, in order to produce the voltage detection value by detecting the ripple voltage generated from the paired third coils 1532c and 1537c.

In addition, the input terminal of the diode 1539 is connected to one end of the paired third coils 1533c and 1534c, to which the AC voltage is induced from the primary coils 214a and 311a connected to different connectors 611 and 710, in order to produce the voltage detection value by detecting the ripple voltage generated from the paired third coils 1533c and 1534c.

Further, the input terminal of the diode 1540 is connected to one end of the paired third coils 1535c and 1536c, to which the AC voltage is induced from the primary coils 312a and 313a connected to different connectors 710 and 711, in order to produce the voltage detection value by detecting the ripple voltage generated from the paired third coils 1535c and 1536c.

The fault detector 120 is connected to output terminals of the diodes 1529, 1530 and 1531 of the first fault detection unit 1521 and output terminals of the diodes 1538, 1539 and 1540 of the second fault detection unit 1522. The fault detector 120 compares the voltage detection value generated from voltage of the six diodes 1529, 1530, 1531, 1538, 1539 and 1540 with the predetermined threshold value so as to detect the fault and generates the comparison result.

As described above, according to the fifteenth embodiment of the present invention, the connector for interconnecting substrates electrically connects the first and second power supply lines, the first and second substrates, the first and second group balance transforms and the first and second fault detection units. In addition, among the plural third coils of each fault detection unit, the paired third coils, to which the AC voltage is induced from the primary coils connected to different connectors, are serially connected to each other through the connector so as to offset the AC voltage generated from the paired third coils and one end of the paired third coils is connected to input terminals of the plural diodes. Thus, according to the thirteenth embodiment of the present invention, the backlight assembly can be fabricated in a large size without increasing the number of connector terminals interposed between substrates.

Further, according to the fifteenth embodiment of the present invention, even if the number of the cold cathode fluorescent lamps increases due to the large-size backlight assembly and the opening fault occurs in the connector that combines a pair of cold cathode fluorescent lamps, since the third coil, to which the AC voltage is induced from the primary coil connected between one connector and the output terminal of the inverter, is serially connected to another third coil, to which the AC voltage is induced from the primary coil connected to the other connector, AC voltages generated from the paired third coils are offset from each other in each substrate and the abnormal operation of the backlight assembly can be more precisely detected.

### Embodiment 16

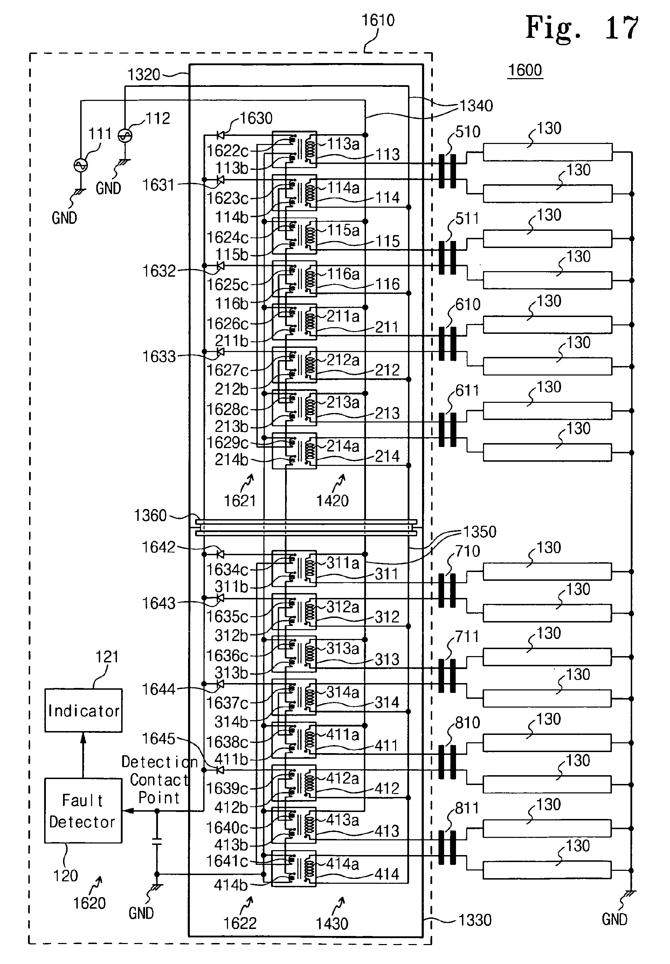

Hereinafter, a sixteenth embodiment of the present invention will be described in detail with reference to accompanying drawings. FIG. 17 is a circuit diagram showing an inverter circuit and a backlight assembly according to the sixteenth embodiment of the present invention. The same reference numerals will be assigned to the elements identical to the elements shown in the twelfth and fourteenth embodiments, and detailed description thereof will be omitted in order to avoid redundancy.

As shown in FIG. 17, the backlight assembly 1600 according to the sixteenth embodiment of the present invention includes the inverter circuit 1610, eight pairs of cold cathode fluorescent lamps (discharge tubes) 130, and eight connectors 510, 511, 610, 611, 710, 711, 810 and 811.

The inverter circuit 1610 includes two inverters 111 and 112, a first substrate 1320, a second substrate 1330, a first power supply line 1340 mounted on the first substrate 1320, a second power supply line 1350 mounted on the second substrate 1330, a connector 1360 that interconnects the substrates, first group balance transformers 1420 mounted on the first substrate 1320, second group balance transforms 1430 mounted on the second substrate 1330, and a fault detection device 1620. That is, the inverter circuit 1610 according to the sixteenth embodiment of the present invention is identical to the inverter circuit 1410 according to the fourteenth embodiment of the present invention, except for the structure of the fault detection device 1620.

The fault detection device 1620 detects high voltage abnormal discharge in the inverter circuit 1610, such as corona discharge and arc discharge, which are generated when a defect occurs in an insulator provided between a high voltage section and the ground GND. The fault detection device 1620 detects the abnormal operation based on the voltage detection values generated from voltages of the first and second group balance transformers 1420 and 1430.

The fault detection device 1620 includes a first fault detection unit 1621, a second fault detection unit 1622, a fault detector 120 and an indicator 121. The first fault detection unit 1621 is electrically connected to the second fault detection unit 1622 through the connector 1360.

The first fault detection unit 1621 includes four pairs of third coils 1622c, 1623c, 1624c, 1625c, 1626c, 1627c, 1628c and 1629c and four diodes 1630, 1631, 1632 and 1633.

Among the third coils 1622c, 1623c, 1624c, 1625c, 1626c, 1627c, 1628c and 1629c of the first fault detection unit 1621, paired third coils, to which the AC voltage is induced from the primary coils connected to different connectors, are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 1622c and 1629c are serially connected to each other so as to offset AC voltage generated from the paired third coils 1622c and 1629c, in which the AC voltage is induced to the paired third coils 1622c and 1629c from the primary coils 113a and 214a connected to different connectors 510 and 611, respectively. In addition, one end of the paired third coils 1622c and 1629c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

In addition, the paired third coils 1623c and 1624c are serially connected to each other so as to offset AC voltage generated from the paired third coils 1623c and 1624c, in which the AC voltage is induced to the paired third coils 1623c and 1624c from the primary coils 114a and 115a connected to different connectors 510 and 511, respectively. In addition, one end of the paired third coils 1623c and 1624c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

Further, the paired third coils 1625c and 1626c are serially connected to each other so as to offset AC voltage generated from the paired third coils 1625c and 1626c, in which the AC voltage is induced to the paired third coils 1625c and 1626c from the primary coils 116a and 21 1 a connected to different connectors 511 and 610, respectively. In addition, one end of the paired third coils 1625c and 1626c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

Furthermore, the paired third coils 1627c and 1628c are serially connected to each other so as to offset AC voltage generated from the paired third coils 1627c and 1628c, in which the AC voltage is induced to the paired third coils 1627c and 1628c from the primary coils 212a and 213a connected to different connectors 610 and 611, respectively. In addition, one end of the paired third coils 1627c and 1628c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

The second fault detection unit 1622 includes four pairs of third coils 1634c, 1635c, 1636c, 1637c, 1638c, 1639c, 1640c and 1641c and four diodes 1642, 1643, 1644 and 1645.

Among the third coils 1634c, 1635c, 1636c, 1637c, 1638c, 1639c, 1640c and 1641c of the second fault detection unit 1622, paired third coils, to which the AC voltage is induced from the primary coils connected to different connectors, are serially connected to each other so as to offset AC voltage generated from the paired third coils, and one end of the paired third coils is connected to the secondary coil serial loop. In addition, one end of the paired third coils can be directly connected to the ground GND, other than connected to the ground GND through the secondary coil serial loop.

That is, the paired third coils 1634c and 1641 c are serially connected to each other so as to offset AC voltage generated from the paired third coils 1634c and 1641c, in which the AC voltage is induced to the paired third coils 1634c and 1641 c from the primary coils 311 a and 414a connected to different connectors 710 and 811, respectively. In addition, one end of the paired third coils 1634c and 1641 c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

In addition, the paired third coils 1635c and 1636c are serially connected to each other so as to offset AC voltage generated from the paired third coils 1635c and 1636c, in which the AC voltage is induced to the paired third coils 1635c and 1636c from the primary coils 312a and 313a connected to different connectors 710 and 711, respectively. In addition, one end of the paired third coils 1635c and 1636c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

Further, the paired third coils 1637c and 1638c are serially connected to each other so as to offset AC voltage generated from the paired third coils 1637c and 1638c, in which the AC voltage is induced to the paired third coils 1637c and 1638c from the primary coils 314a and 411 a connected to different connectors 711 and 810, respectively. In addition, one end of the paired third coils 1637c and 1638c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

Furthermore, the paired third coils 1639c and 1640c are serially connected to each other so as to offset AC voltage generated from the paired third coils 1639c and 1640c, in which the AC voltage is induced to the paired third coils 1639c and 1640c from the primary coils 41 2a and 413a connected to different connectors 810 and 811, respectively. In addition, one end of the paired third coils 1639c and 1640c is connected to the ground GND by way of the serial loop of the secondary coils 113b, 114b, 115b, 116b, 211b, 212b, 213b, 214b, 311b, 312b, 313b, 314b, 411b, 412b, 413b and 414b.

In this manner, the third coils of the first fault detection unit 1621 are connected to the third coils of the second fault detection unit 1622 by means of the connector 1360, and one end of the third coils of the first and second fault detection units 1621 and 1622 can be connected to the ground through the secondary coil serial loop.

Input terminals of the four diodes 1630, 1631, 1632 and 1633 of the first fault detection unit 1621 are connected to one end of the paired third coils so as to detect ripple voltage generated from the paired third coils and then produce the voltage detection value.

That is, the input terminal of the diode 1630 is connected to one end of the paired third coils 1622c and 1629c, to which the AC voltage is induced from the primary coils 113a and 214a connected to different connectors 510 and 611, in order to produce the voltage detection value by detecting the ripple voltage generated from the paired third coils 1622c and 1629c.

In addition, the input terminal of the diode 1631 is connected to one end of the paired third coils 1623c and 1624c, to which the AC voltage is induced from the primary coils 114a and 115a connected to different connectors 510 and 511, in order to produce the voltage detection value by detecting the ripple voltage generated from the paired third coils 1623c and 1624c.

Further, the input terminal of the diode 1632 is connected to one end of the paired third coils 1625c and 1626c, to which the AC voltage is induced from the primary coils 116a and 211 a connected to different connectors 511 and 610, in order to produce the voltage detection value by detecting the ripple voltage generated from the paired third coils 1625c and 1626c.

Furthermore, the input terminal of the diode 1633 is connected to one end of the paired third coils 1627c and 1628c, to which the AC voltage is induced from the primary coils 212a and 213a connected to different connectors 610 and 611, in order to produce the voltage detection value by detecting the ripple voltage generated from the paired third coils 1627c and 1628c.

Input terminals of the four diodes 1642, 1643, 1644 and 1645 of the second fault detection unit 1622 are connected to one end of the paired third coils so as to detect ripple voltage generated from the paired third coils and then produce the voltage detection value.

That is, the input terminal of the diode 1642 is connected to one end of the paired third coils 1634c and 1641c, to which the AC voltage is induced from the primary coils 311a and 414a connected to different connectors 710 and 811, in order to produce the voltage detection value by detecting the ripple voltage generated from the paired third coils 1634c and 1641c.

In addition, the input terminal of the diode 1643 is connected to one end of the paired third coils 1635c and 1636c, to which the AC voltage is induced from the primary coils 312a and 313a connected to different connectors 710 and 711, in order to produce the voltage detection value by detecting the ripple voltage generated from the paired third coils 1635c and 1636c.

Further, the input terminal of the diode 1644 is connected to one end of the paired third coils 1637c and 1638c, to which the AC voltage is induced from the primary coils 314a and 411a connected to different connectors 711 and 810, in order to produce the voltage detection value by detecting the ripple voltage generated from the paired third coils 1637c and 1638c.

Furthermore, the input terminal of the diode 1645 is connected to one end of the paired third coils 1639c and 1640c, to which the AC voltage is induced from the primary coils 412a and 413a connected to different connectors 810 and 811, in order to produce the voltage detection value by detecting the ripple voltage generated from the paired third coils 1639c and 1640c.

The fault detector 120 is connected to output terminals of the diodes 1630, 1631, 1632 and 1633 of the first fault detection unit 1621 and output terminals of the diodes 1642, 1643, 1644 and 1645 of the second fault detection unit 1622. The fault detector 120 compares the voltage detection value generated from voltage of the eight diodes 1630, 1631, 1632, 1633, 1642, 1643, 1644 and 1645 with the predetermined threshold value so as to detect the fault and generates the comparison result.

Although the first to sixteenth embodiments of the present invention have been described in relation to the backlight assembly having four to sixteen cold cathode fluorescent lamps, which are provided as pairs, the present invention is also applicable for the backlight assembly having eighteen cathode fluorescent lamps or more, which are provided as pairs.

According to the inverter circuit and the backlight assembly described above, the paired third coils, which are adjacent to each other, are serially connected to each other so as to offset the AC voltage generated from the paired third coils, and one end of the paired third coils is connected to input terminals of the plural diodes. In addition, the fault detector compares the voltage detection value generated from voltages of the plural diodes with the predetermined threshold value to detect the fault and transmits the comparison result to the indicator. Further, even if the voltage rises in the backlight assembly due to impedance variation caused by the temperature gradient, the threshold value used to detect the abnormal operation of the backlight assembly can be appropriately set and the abnormal operation can be precisely detected.

That is, when impedance variation occurs due to the temperature gradient in the plural cold cathode fluorescent lamps, each paired third coils may generate voltages different from each other due to the difference in impedance, but AC voltages generated from the paired third coils, which are adjacent to each other, are offset from each other, so the threshold value can be set based on the differential voltage between the paired third coils. Thus, as compared with the conventional art, the abnormal operation of the backlight assembly can be precisely detected even if the threshold value is set to a low level. Therefore, since the threshold value used to detect the abnormal operation of the backlight assembly can be appropriately set, voltage variation can be precisely detected even if the voltage is slightly increased due to arc discharge caused by the opening fault and is below the threshold value under a condition of the conventional art. Thus, the abnormal operation of the backlight assembly can be precisely detected.

In addition, since only one diode is required for the paired third coils, which are adjacent to each other, the number of diodes can be reduced as compared with the prior art in which the diode is provided for each third coil. Accordingly, the circuit structure can be simplified and the manufacturing cost can be reduced.

Further, when the plural cold cathode fluorescent lamps are connected to the balance transformers, two cold cathode fluorescent lamps are combined by means of the connector, so workability can be improved when installing or exchanging the cold cathode fluorescent lamps and the manufacturing cost can be reduced.

In addition, according to the backlight assembly described above, the paired third coils, to which the AC voltage is induced from the primary coils connected to different connectors, are serially connected to each other so as to offset the AC voltage generated from the paired third coils, and one end of the paired third coils is connected to input terminals of the plural diodes. In addition, the fault detector compares the voltage detection value generated from voltage of the plural diodes with the predetermined threshold value to detect the fault and transmits the comparison result to the indicator. Accordingly, even if the opening fault occurs in the pair of cold cathode fluorescent lamps in the backlight assembly, the threshold value used to detect the abnormal operation of the backlight assembly can be appropriately set and the abnormal operation can be precisely detected.

In other words, when the opening fault occurs in the connector that combines a pair of cold cathode fluorescent lamps, since the third coil, to which the AC voltage is induced from the primary coil connected between one connector and the output terminal of the inverter, is serially connected to another third coil, to which the AC voltage is induced from the primary coil connected to the other connector, so as to offset the AC voltage generated from the paired third coils, the abnormal operation of the backlight assembly can be precisely detected.

In addition, since only one diode is required for the paired third coils, the number of diodes can be reduced as compared with the prior art in which the diode is provided for each third coil. Accordingly, the circuit structure can be simplified and the manufacturing cost can be reduced.

According to the backlight assembly having the above structure, the connector for interconnecting substrates electrically connects the first and second power supply lines, the first and second substrates, the first and second group balance transforms and the first and second fault detection units. In addition, among the plural third coils of each fault detection unit, adjacent third coils, which are aligned as a pair, are serially connected to each other through the connector so as to offset the AC voltage generated from the paired third coils and one end of the paired third coils is connected to input terminals of the plural diodes. Thus, the backlight assembly can be fabricated in a large size without increasing the number of connector terminals interposed between substrates.

Further, even if the number of the cold cathode fluorescent lamps increases due to the large-size backlight assembly, since the adjacent third coils, which are aligned as a pair, are serially connected to each other so as to offset the AC voltage generated from the paired third coils, the abnormal operation of the backlight assembly can be more precisely detected.

In addition, since only one diode is required for the paired third coils, the number of diodes can be reduced as compared with the prior art in which the diode is provided for each third coil. Accordingly, the circuit structure can be simplified and the manufacturing cost can be reduced.

Further, according to the backlight assembly described above, the connector for interconnecting substrates electrically connects the first and second power supply lines, the first and second substrates, the first and second group balance transforms and the first and second fault detection units. In addition, among the plural third coils of the first and second fault detection units, the paired third coils, to which the AC voltage is induced from the primary coils connected to different connectors, are serially connected to each other through the connector so as to offset the AC voltage generated from the paired third coils and one end of the paired third coils is connected to input terminals of the plural diodes. Thus, the backlight assembly can be fabricated in a large size without increasing the number of connector terminals interposed between substrates.

In addition, even if the number of the cold cathode fluorescent lamps increases due to the large-size backlight assembly and the opening fault occurs in the connector that combines a pair of cold cathode fluorescent lamps, since the third coil, to which the AC voltage is induced from the primary coil connected between one connector and the output terminal of the inverter, is serially connected to another third coil, to which the AC voltage is induced from the primary coil connected to the other connector, in each substrate so as to offset the AC voltage generated from the paired third coils, the abnormal operation of the backlight assembly can be more precisely detected.

Further, since only one diode is required for the paired third coils, the number of diodes can be reduced as compared with the prior art in which the diode is provided for each third coil. Accordingly, the circuit structure can be simplified and the manufacturing cost can be reduced.

According to the present invention, the abnormal operation of the backlight assembly can be precisely detected, even if the voltage rises in the backlight assembly due to impedance variation caused by the temperature gradient.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. An inverter circuit comprising:
inverters converting DC voltage into AC voltage to transmit the AC voltage to plural pairs of discharge tubes;
a plurality of balance transformers connected to output terminals of the inverters; and
a fault detection device that detects a fault based on values of current applied to the balance transformers, wherein the balance transformers comprise:
plural pairs of primary coils connected between the output terminals of the inverters and the plural pairs of discharge tubes, respectively; and
a plurality of secondary coils aligned corresponding to the primary coils, in which adjacent secondary coils are serially connected to each other to form a serial loop of the secondary coils, a part of the serial loop of the secondary coils being connected to ground, and wherein
the fault detection device comprises:
plural pairs of third coils aligned corresponding to the primary coils, in which adjacent third coils, which are aligned as a pair, are serially connected to each other to offset AC voltage generated from the paired third coils, one end of the paired third coils being connected to ground;
a plurality of diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating a comparison result.

2. The inverter circuit as claimed in claim 1, wherein the inverter circuit comprises:
inverters converting DC voltage into AC voltage to transmit the AC voltage to two pairs of discharge tubes;
four balance transformers connected to output terminals of the inverters; and
a fault detection device that detects a fault based on values of current applied to the balance transformers, wherein the balance transformers comprise:
two pairs of primary coils connected between the output terminals of the inverters and the two pairs of discharge tubes, respectively; and four secondary coils, in which adjacent secondary coils are serially connected to each other to form a serial loop of the secondary coils, a part of the serial loop of the secondary coils being connected to ground, and the fault detection device comprises:
two pairs of third coils, in which adjacent third coils aligned as a pair are serially connected to each other to offset AC voltage generated from the paired third coils, one end of the paired third coils being connected to ground;
two diodes having input terminals connected to the other end of the paired third coils so as to generate a voltage detection value by detecting voltage generated from the paired third coil; and
a fault detector comparing the voltage detection value generated from output terminals of the diodes with a predetermined threshold value to detect a fault and generating a comparison result.

3. The inverter circuit as claimed in claim 1, wherein the inverter circuit comprises:
inverters converting DC voltage into AC voltage to transmit the AC voltage to four pairs of discharge tubes;
eight balance transformers connected to output terminals of the inverters; and
a fault detection device that detects a fault based on values of current applied to the balance transformers, wherein the balance transformers comprise:
four pairs of primary coils connected between the output terminals of the inverters and the four pairs of discharge tubes, respectively; and
eight secondary coils, in which adjacent secondary coils are serially connected to each other to form a serial loop of the secondary coils, a part of the serial loop of the secondary coils being connected to ground, and the fault detection device comprises:
four pairs of third coils, in which adjacent third coils aligned as a pair are serially connected to each other to offset AC voltage generated from the paired third coils, one end of the paired third coils being connected to ground;
four diodes having input terminals connected to the other end of the paired third coils so as to generate a voltage detection value by detecting voltage generated from the paired third coil; and
a fault detector comparing the voltage detection value generated from output terminals of the diodes with a predetermined threshold value to detect a fault and generating a comparison result.

4. The inverter circuit as claimed in claim 1, wherein the inverter circuit comprises:
inverters converting DC voltage into AC voltage to transmit the AC voltage to six pairs of discharge tubes;
twelve balance transformers connected to output terminals of the inverters; and
a fault detection device that detects a fault based on values of current applied to the balance transformers, wherein
the balance transformers comprise:
six pairs of primary coils connected between the output terminals of the inverters and the six pairs of discharge tubes, respectively; and
twelve secondary coils, in which adjacent secondary coils are serially connected to each other to form a serial loop of the secondary coils, a part of the serial loop of the secondary coils is connected to ground, and
the fault detection device comprises:
six pairs of third coils, in which adjacent third coils aligned as a pair are serially connected to each other to offset AC voltage generated from the paired third coils, one end of the paired third coils being connected to ground;
six diodes having input terminals connected to the other end of the paired third coils so as to generate a voltage detection value by detecting voltage generated from the paired third coil; and
a fault detector comparing the voltage detection value generated from output terminals of the diodes with a predetermined threshold value to detect a fault and generating the comparison result.

5. The inverter circuit as claimed in claim 1, wherein the inverter circuit comprises:
inverters converting DC voltage into AC voltage to transmit the AC voltage to eight pairs of discharge tubes;
sixteen balance transformers connected to output terminals of the inverters; and
a fault detection device that detects a fault based on values of current applied to the balance transformers, wherein
the balance transformers comprise:
eight pairs of primary coils connected between the output terminals of the inverters and the eight pairs of discharge tubes, respectively; and
sixteen secondary coils, in which adjacent secondary coils are serially connected to each other to form a serial loop of the secondary coils, a part of the serial loop of the secondary coils being connected to ground, and the fault detection device comprises:
eight pairs of third coils, in which adjacent third coils aligned as a pair are serially connected to each other to offset AC voltage generated from the paired third coils, one end of the paired third coils being connected to ground;
eight diodes having input terminals connected to the other end of the paired third coils so as to generate a voltage detection value by detecting voltage generated from the paired third coil; and
a fault detector comparing the voltage detection value generated from output terminals of the diodes with a predetermined threshold value to detect a fault and generating a comparison result.

6. A backlight assembly comprising:
plural pairs of discharge tubes;
inverters converting DC voltage into AC voltage to transmit the AC voltage to the plural pairs of discharge tubes;
a plurality of balance transformers connected to output terminals of the inverters;
a plurality of connectors that combine adjacent discharge tubes, which are aligned as a pair, so as to connect the paired discharge tubes to respective inverter through primary coils of the balance transformers; and
a fault detection device that detects a fault based on values of current applied to the balance transformers, wherein
the balance transformers comprise:
plural pairs of primary coils connected between the output terminals of the inverters and the plural pairs of discharge tubes, respectively; and
a plurality of secondary coils aligned corresponding to the primary coils, in which adjacent secondary coils are serially connected to each other to form a serial loop of the secondary coils, a part of the serial loop of the secondary coils being connected to ground, and
the fault detection device comprises:
plural pairs of third coils aligned corresponding to the primary coils, in which adjacent third coils, which are aligned as a pair, are serially connected to each other to offset AC voltage generated from the paired third coils, one end of the paired third coils being connected to ground;
a plurality of diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

7. The backlight assembly as claimed in claim 6, wherein the backlight assembly comprises:
two pairs of discharge tubes;
inverters converting DC voltage into AC voltage to transmit the AC voltage to the two pairs of discharge tubes;
four balance transformers connected to output terminals of the inverters;
two connectors that combine adjacent discharge tubes, which are aligned as a pair, so as to connect the paired cold cathode fluorescent lamps to respective inverter through primary coils of the four balance transformers; and
a fault detection device that detects a fault based on values of current applied to the balance transformers, wherein
the balance transformers comprise:
two pairs of primary coils connected between the output terminals of the inverters and the two pairs of discharge tubes, respectively; and
four secondary coils, in which adjacent secondary coils are serially connected to each other to form a serial loop of the secondary coils, and a part of the serial loop of the secondary coils being connected to ground, and
the fault detection device comprises:
two pairs of third coils, in which adjacent third coils, which are aligned as a pair, are serially connected to each other to offset AC voltage generated from the paired third coils, and one end of the paired third coils being connected to ground;
two diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

8. The backlight assembly as claimed in claim 6, wherein the backlight assembly comprises:
four pairs of discharge tubes;
inverters converting DC voltage into AC voltage to transmit the AC voltage to the four pairs of discharge tubes;
eight balance transformers connected to output terminals of the inverters;
four connectors that combine adjacent discharge tubes, which are aligned as a pair, so as to connect the paired discharge tubes to respective inverter through primary coils of the eight balance transformers; and
a fault detection device that detects a fault based on values of current applied to the balance transformers, wherein
the balance transformers comprise:
four pairs of primary coils connected between the output terminals of the inverters and the four pairs of discharge tubes, respectively; and
eight secondary coils, in which adjacent secondary coils are serially connected to each other to form a serial loop of the secondary coils, and a part of the serial loop of the secondary coils being connected to ground, and
the fault detection device comprises:
four pairs of third coils, in which adjacent third coils, which are aligned as a pair, are serially connected to each other to offset AC voltage generated from the paired third coils, and one end of the paired third coils being connected to ground;
four diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

9. The backlight assembly as claimed in claim 6, wherein the backlight assembly comprises:
six pairs of discharge tubes;
inverters converting DC voltage into AC voltage to transmit the AC voltage to the six pairs of discharge tubes;
twelve balance transformers connected to output terminals of the inverters; six connectors that combine adjacent discharge tubes, which are aligned as a pair, so as to connect the paired discharge tubes to respective inverter through primary coils of the twelve balance transformers; and
a fault detection device that detects a fault based on values of current applied to the balance transformers, wherein
the balance transformers comprise:
six pairs of primary coils connected between the output terminals of the inverters and the six pairs of discharge tubes, respectively; and
twelve secondary coils, in which adjacent secondary coils are serially connected to each other to form a serial loop of the secondary coils, and a part of the serial loop of the secondary coils being connected to ground, and
the fault detection device comprises:
six pairs of third coils, in which adjacent third coils, which are aligned as a pair, are serially connected to each other to offset AC voltage generated from the paired third coils, and one end of the paired third coils being connected to ground;
six diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

10. The backlight assembly as claimed in claim 6, wherein the backlight assembly comprises:
eight pairs of discharge tubes;
inverters converting DC voltage into AC voltage to transmit the AC voltage to the eight pairs of discharge tubes;
sixteen balance transformers connected to output terminals of the inverters;
eight connectors that combine adjacent discharge tubes, which are aligned as a pair, so as to connect the paired discharge tubes to respective inverter through primary coils of the sixteen balance transformers; and
a fault detection device that detects a fault based on values of current applied to the balance transformers, wherein
the balance transformers comprise:
eight pairs of primary coils connected between the output terminals of the inverters and the eight pairs of discharge tubes, respectively; and
sixteen secondary coils, in which adjacent secondary coils are serially connected to each other to form a serial loop of the secondary coils, and a part of the serial loop of the secondary coils being connected to ground, and
the fault detection device comprises:
eight pairs of third coils, in which adjacent third coils, which are aligned as a pair, are serially connected to each other to offset AC voltage generated from the paired third coils, and one end of the paired third coils being connected to ground;
eight diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

11. A backlight assembly comprising:
plural pairs of discharge tubes;
inverters converting DC voltage into AC voltage to transmit the AC voltage to the plural pairs of discharge tubes;
a plurality of balance transformers connected to output terminals of the inverters;
a plurality of connectors that combine adjacent discharge tubes, which are aligned as a pair, so as to connect the paired discharge tubes to respective inverter through primary coils of the plural balance transformers; and
a fault detection device that detects a fault based on values of current applied to the balance transformers, wherein
the balance transformers comprise:
plural pairs of primary coils connected between the output terminals of the inverters and the plural connectors, respectively; and
a plurality of secondary coils aligned corresponding to the primary coils, in which adjacent secondary coils are serially connected to each other to form a serial loop of the secondary coils, and a part of the serial loop of the secondary coils being connected to ground, and
the fault detection device comprises:
plural pairs of third coils aligned corresponding to the primary coils, in which the third coils, which are aligned as a pair and AC voltage is induced thereto from the primary coils connected to different connectors, are serially connected to each other to offset AC voltage generated from the paired third coils, and one end of the paired third coils being connected to ground;
a plurality of diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

12. The backlight assembly as claimed in claim 11, wherein the backlight assembly comprises:
two pairs of discharge tubes;
inverters converting DC voltage into AC voltage to transmit the AC voltage to the two pairs of discharge tubes;
four balance transformers connected to output terminals of the inverters;
two connectors that combine adjacent discharge tubes, which are aligned as a pair, so as to connect the paired discharge tubes to respective inverter through primary coils of the four balance transformers; and
a fault detection device that detects a fault based on values of current applied to the balance transformers, wherein
the balance transformers comprise:
two pairs of primary coils connected between the output terminals of the inverters and the two connectors, respectively; and
four secondary coils, in which adjacent secondary coils are serially connected to each other to form a serial loop of the secondary coils, and a part of the serial loop of the secondary coils being connected to ground, and
the fault detection device comprises:
two pairs of third coils, in which the third coils, which are aligned as a pair and AC voltage is induced thereto from the primary coils connected to different connectors, are serially connected to each other to offset AC voltage generated from the paired third coils, and one end of the paired third coils being connected to ground;
two diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

13. The backlight assembly as claimed in claim 11, wherein the backlight assembly comprises:
four pairs of discharge tubes;
inverters converting DC voltage into AC voltage to transmit the AC voltage to the four pairs of discharge tubes;
eight balance transformers connected to output terminals of the inverters;
four connectors that combine adjacent discharge tubes, which are aligned as a pair, so as to connect the paired discharge tubes to respective inverter through primary coils of the eight balance transformers; and
a fault detection device that detects a fault based on values of current applied to the balance transformers, wherein
the balance transformers comprise:
four pairs of primary coils connected between the output terminals of the inverters and the four connectors, respectively; and
eight secondary coils, in which adjacent secondary coils are serially connected to each other to form a serial loop of the secondary coils, and a part of the serial loop of the secondary coils being connected to ground, and
the fault detection device comprises:
four pairs of third coils, in which the third coils, which are aligned as a pair and AC voltage is induced thereto from the primary coils connected to different connectors, are serially connected to each other to offset AC voltage generated from the paired third coils, and one end of the paired third coils being connected to ground;
four diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

14. The backlight assembly as claimed in claim 11, wherein the backlight assembly comprises:
six pairs of discharge tubes;
inverters converting DC voltage into AC voltage to transmit the AC voltage to the six pairs of discharge tubes;
twelve balance transformers connected to output terminals of the inverters; six connectors that combine adjacent discharge tubes, which are aligned as a pair, so as to connect the paired discharge tubes to respective inverter through primary coils of the twelve balance transformers; and
a fault detection device that detects a fault based on values of current applied to the balance transformers, wherein
the balance transformers comprise:
six pairs of primary coils connected between the output terminals of the inverters and the six connectors, respectively; and
twelve secondary coils, in which adjacent secondary coils are serially connected to each other to form a serial loop of the secondary coils, and a part of the serial loop of the secondary coils being connected to ground, and
the fault detection device comprises:
six pairs of third coils, in which the third coils, which are aligned as a pair and AC voltage is induced thereto from the primary coils connected to different connectors, are serially connected to each other to offset AC voltage generated from the paired third coils, and one end of the paired third coils being connected to ground;
six diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

15. The backlight assembly as claimed in claim 11, wherein the backlight assembly comprises:
eight pairs of discharge tubes;
inverters converting DC voltage into AC voltage to transmit the AC voltage to the eight pairs of discharge tubes;
sixteen balance transformers connected to output terminals of the inverters;
eight connectors that combine adjacent discharge tubes, which are aligned as a pair, so as to connect the paired discharge tubes to respective inverter through primary coils of the sixteen balance transformers; and
a fault detection device that detects a fault based on values of current applied to the balance transformers, wherein
the balance transformers comprise:
eight pairs of primary coils connected between the output terminals of the inverters and the eight connectors, respectively; and
sixteen secondary coils, in which adjacent secondary coils are serially connected to each other to form a serial loop of the secondary coils, a part of the serial loop of the secondary coils being connected to ground, and
the fault detection device comprises:
eight pairs of third coils, in which the third coils, which are aligned as a pair and AC voltage is induced thereto from the primary coils connected to different connectors, are serially connected to each other to offset AC voltage generated from the paired third coils, one end of the paired third coils being connected to ground;
eight diodes having input terminals connected to the other end of the paired third coils so as to generate a voltage detection value by detecting voltage generated from the paired third coils; and
a fault detector comparing the voltage detection value generated from output terminals of the diodes with a predetermined threshold value to detect a fault and generating the comparison result.

16. A backlight assembly comprising:
plural pairs of discharge tubes;
inverters converting DC voltage into AC voltage to transmit the AC voltage
to the plural pairs of discharge tubes;
first and second substrates;
first and second power supply lines, which are mounted on the first and
second substrates, respectively, so as to supply power from the inverters to
the plural pairs of discharge tubes;
first and second group balance transformers mounted on the first and
second substrates, respectively;
a fault detection device that detects a fault based on values of current applied to the first and second group balance transformers and includes first and second fault detection units, a fault detector and an indicator; and
connector that electrically connects the first and second power supply lines,
the first and second group balance transformers, and the first and second fault detection units, respectively, wherein
output terminals of the inverters are connected to the first power supply line,
the first group balance transformers comprise:
plural pairs of first group primary coils connected between the first power
supply line and the plural pairs of discharge tubes, respectively; and
a plurality of first group secondary coils aligned corresponding to the first group primary coils, in which adjacent first group secondary coils are serially connected to each other;
the second group balance transformers comprise:
plural pairs of second group primary coils connected between the second power supply line and the plural pairs of discharge tubes, respectively; and
a plurality of second group secondary coils aligned corresponding to the second group primary coils, in which adjacent second group secondary coils are serially connected to each other;
the first group secondary coils are connected to the second group secondary coils by means of the connector so as to form a serial loop of the secondary coils, and a part of the serial loop of the secondary coils being connected to ground,
the first fault detection unit comprises:
plural pairs of first group third coils aligned corresponding to the first group primary coils, in which adjacent first group third coils aligned as a pair, are serially connected to each other to offset AC voltage generated from the paired first group third coils; and
a plurality of first group diodes having input terminals connected to one end of the paired first group third coils so as to generate a voltage detection value by detecting voltage generated from the paired first group third coils;
the second fault detection unit comprises:
plural pairs of second group third coils aligned corresponding to the second group primary coils, in which adjacent second group third coils aligned as a pair, are serially connected to each other to offset AC voltage generated from the paired second group third coils; and
a plurality of second group diodes having input terminals connected to one end of the paired second group third coils so as to generate a voltage detection value by detecting voltage generated from the paired second group third coils;
the first group third coils are connected to the second group third coils by means of the connector, one end of the paired third coils of the first and
second groups being connected to ground, and
the fault detector compares the voltage detection value generated from output terminals of the diodes with a predetermined threshold value to detect a fault and generates the comparison result.

17. The backlight assembly as claimed in claim 16, wherein the backlight assembly comprises:
six pairs of discharge tubes;
inverters converting DC voltage into AC voltage to transmit the AC voltage to the six pairs of discharge tubes;
first and second substrates;
first and second power supply lines, which are mounted on the first and
second substrates, respectively, so as to supply power from the inverters to the six pairs of discharge tubes;
first and second group balance transformers mounted on the first and
second substrates, respectively;
a fault detection device that detects a fault based on values of current applied to the first and second group balance transformers and includes first and second fault detection units, a fault detector and an indicator; and
connector that electrically connects the first and second power supply lines, the first and second group balance transformers, and the first and second fault detection units, respectively, wherein
output terminals of the inverters are connected to the first power supply line,
the first group balance transformers comprise:
three pairs of first group primary coils connected between the first power supply line and three pairs of discharge tubes, respectively; and
six first group secondary coils, in which adjacent first group secondary coils are serially connected to each other;
the second group balance transformers comprise:
three pairs of second group primary coils connected between the second power supply line and three pairs of discharge tubes, respectively; and
six second group secondary coils, in which adjacent second group secondary coils are serially connected to each other;
the first group secondary coils are connected to the second group secondary coils by means of the connector so as to form a serial loop of the secondary coils, and a part of the serial loop of the secondary coils being connected to ground,
the first fault detection unit comprises:
three pairs of first group third coils, in which adjacent first group third coils aligned as a pair, are serially connected to each other to offset AC voltage generated from the paired first group third coils; and
three first group diodes having input terminals connected to one end of the paired first group third coils so as to generate a voltage detection value by detecting voltage generated from the paired first group third coils;
the second fault detection unit comprises:
three pairs of second group third coils, in which adjacent second group third coils aligned as a pair, are serially connected to each other to offset AC voltage generated from the paired second group third coils; and
three second group diodes having input terminals connected to one end of the paired second group third coils so as to generate a voltage detection value by detecting voltage generated from the paired second group third coils;
the first group third coils are connected to the second group third coils by means of the connector, one end of the paired third coils of the first and
second groups being connected to ground, and
the fault detector compares the voltage detection value generated from output terminals of the diodes with a predetermined threshold value to detect a fault and generates the comparison result.

18. The backlight assembly as claimed in claim 16, wherein the backlight assembly comprises:
eight pairs of discharge tubes;
inverters converting DC voltage into AC voltage to transmit the AC voltage to the eight pairs of discharge tubes;
first and second substrates;
first and second power supply lines, which are mounted on the first and
second substrates, respectively, so as to supply power from the inverters to the eight pairs of discharge tubes;
first and second group balance transformers mounted on the first and
second substrates, respectively;
a fault detection device that detects a fault based on values of current applied to the first and second group balance transformers and includes first and second fault detection units, a fault detector and an indicator; and
connector that electrically connects the first and second power supply lines, the first and second group balance transformers, and the first and second fault detection units, respectively, wherein
output terminals of the inverters are connected to the first power supply line,
the first group balance transformers comprise:
four pairs of first group primary coils connected between the first power supply line and four pairs of discharge tubes, respectively; and
eight first group secondary coils, in which adjacent first group secondary coils are serially connected to each other;
the second group balance transformers comprise:
four pairs of second group primary coils connected between the second power supply line and four pairs of discharge tubes, respectively; and
eight second group secondary coils, in which adjacent second group secondary coils are serially connected to each other;
the first group secondary coils are connected to the second group secondary coils by means of the connector so as to form a serial loop of the secondary coils, and a part of the serial loop of the secondary coils being connected to ground,
the first fault detection unit comprises:
four pairs of first group third coils, in which adjacent first group third coils aligned as a pair, are serially connected to each other to offset AC voltage generated from the paired first group third coils; and
four first group diodes having input terminals connected to one end of the paired first group third coils so as to generate a voltage detection value by detecting voltage generated from the paired first group third coils;
the second fault detection unit comprises:
four pairs of second group third coils, in which adjacent second group third coils aligned as a pair, are serially connected to each other to offset AC voltage generated from the paired second group third coils; and
four second group diodes having input terminals connected to one end of the paired second group third coils so as to generate a voltage detection value by detecting voltage generated from the paired second group third coils;
the first group third coils are connected to the second group third coils by means of the connector, one end of the paired third coils of the first and second groups being connected to ground, and
the fault detector compares the voltage detection value generated from output terminals of the diodes with a predetermined threshold value to detect a fault and generates the comparison result.

19. A backlight assembly comprising:
plural pairs of discharge tubes;
inverters converting DC voltage into AC voltage to transmit the AC voltage to the plural pairs of discharge tubes;
a plurality of first connectors that combine a pair of discharge tubes, which are adjacent to each other, so as to connect the paired discharge tubes to the inverters, respectively;
first and second substrates;
first and second power supply lines, which are mounted on the first and
second substrates, respectively, so as to supply power from the inverters to the plural pairs of discharge tubes;
first and second group balance transformers mounted on the first and
second substrates, respectively;
a fault detection device that detects a fault based on values of current applied to the first and second group balance transformers and includes first and second fault detection units, and a fault detector; and
second connector that electrically connects the first and second power supply lines, the first and second group balance transformers, and the first and second fault detection units, respectively, wherein
output terminals of the inverters are connected to the first power supply line,
the first group balance transformers comprise:
plural pairs of first group primary coils connected between the first power supply line and the plural pairs of discharge tubes, respectively; and
a plurality of first group secondary coils, in which adjacent first group secondary coils are serially connected to each other;
the second group balance transformers comprise:
plural pairs of second group primary coils connected between the second power supply line and the plural pairs of discharge tubes, respectively; and
a plurality of second group secondary coils, in which adjacent second group secondary coils are serially connected to each other;
the first group secondary coils are connected to the second group secondary coils by means of the second connector so as to form a serial loop of the secondary coils, and a part of the serial loop of the secondary coils being connected to ground,
the first fault detection unit comprises:
plural pairs of first group third coils, in which first group third coils, which are aligned as a pair and AC voltage is induced thereto from different first connectors, are serially connected to each other to offset AC voltage generated from the paired first group third coils; and
a plurality of first group diodes having input terminals connected to one end of the paired first group third coils so as to generate a voltage detection value by detecting voltage generated from the paired first group third coils;
the second fault detection unit comprises:
plural pairs of second group third coils, in which second group third coils ,which are aligned as a pair and AC voltage is induced thereto from different first connectors, are serially connected to each other to offset AC voltage generated from the paired second group third coils; and
a plurality of second group diodes having input terminals connected to one end of the paired second group third coils so as to generate a voltage detection value by detecting voltage generated from the paired second group third coils;
the first group third coils are connected to the second group third coils by means of the second connector, one end of the paired third coils of the first and second groups being connected to ground , and
the fault detector compares the voltage detection value generated from output terminals of the diodes with a predetermined threshold value to detect a fault and generates the comparison result.

20. The backlight assembly as claimed in claim 19, wherein the backlight assembly comprises:
six pairs of discharge tubes;
inverters converting DC voltage into AC voltage to transmit the AC voltage to the six pairs of discharge tubes;
six first connectors that combine a pair of discharge tubes, which are adjacent to each other, so as to connect the paired discharge tubes to the inverters, respectively;
first and second substrates;
first and second power supply lines, which are mounted on the first and
second substrates, respectively, so as to supply power from the inverters to the six pairs of discharge tubes;
first and second group balance transformers mounted on the first and
second substrates, respectively;
a fault detection device that detects a fault based on values of current applied to the first and second group balance transformers and includes first and second fault detection units, and a fault detector; and
second connector that electrically connects the first and second power supply lines, the first and second group balance transformers, and the first and second fault detection units, respectively, wherein
output terminals of the inverters are connected to the first power supply line,
the first group balance transformers comprise:
three pairs of first group primary coils connected between the first power supply line and three pairs of discharge tubes, respectively; and
six first group secondary coils, in which adjacent first group secondary coils are serially connected to each other;
the second group balance transformers comprise:
three pairs of second group primary coils connected between the second power supply line and three pairs of discharge tubes, respectively; and
six second group secondary coils, in which adjacent second group secondary coils are serially connected to each other;
the first group secondary coils are connected to the second group secondary coils by means of the second connector so as to form a serial loop of the secondary coils, and a part of the serial loop of the secondary coils being connected to ground,
the first fault detection unit comprises:
three pairs of first group third coils, in which first group third coils, which are aligned as a pair and AC voltage is induced thereto from different first connectors, are serially connected to each other to offset AC voltage generated from the paired first group third coils; and
three first group diodes having input terminals connected to one end of the paired first group third coils so as to generate a voltage detection value by detecting voltage generated from the paired first group third coils;
the second fault detection unit comprises:
three pairs of second group third coils, in which second group third coils ,which are aligned as a pair and AC voltage is induced thereto from different first connectors, are serially connected to each other to offset AC voltage generated from the paired second group third coils; and
three second group diodes having input terminals connected to one end of the paired second group third coils so as to generate a voltage detection value by detecting voltage generated from the paired second group third coils;
the first group third coils are connected to the second group third coils by means of the second connector, one end of the paired third coils of the first and second groups being connected to ground, and
the fault detector compares the voltage detection value generated from output terminals of the diodes with a predetermined threshold value to detect a fault and generates the comparison result.

21. The backlight assembly as claimed in claim 19, wherein the backlight assembly comprises:
eight pairs of discharge tubes;
inverters converting DC voltage into AC voltage to transmit the AC voltage to the eight pairs of discharge tubes;
eight first connectors that combine a pair of discharge tubes, which are adjacent to each other, so as to connect the paired discharge tubes to the inverters, respectively;
first and second substrates;
first and second power supply lines, which are mounted on the first and second substrates, respectively, so as to supply power from the inverters to the eight pairs of discharge tubes;
first and second group balance transformers mounted on the first and second substrates, respectively;
a fault detection device that detects a fault based on values of current applied to the first and second group balance transformers and includes first and second fault detection units, and a fault detector; and second connector that electrically connects the first and second power supply lines, the first and second group balance transformers, and the first and second fault detection units, respectively, wherein output terminals of the inverters are connected to the first power supply line,
the first group balance transformers comprise:
four pairs of first group primary coils connected between the first power supply line and four pairs of discharge tubes, respectively; and
eight first group secondary coils, in which adjacent first group secondary coils are serially connected to each other;
the second group balance transformers comprise:
four pairs of second group primary coils connected between the second power supply line and four pairs of discharge tubes, respectively; and
eight second group secondary coils, in which adjacent second group secondary coils are serially connected to each other;
the first group secondary coils are connected to the second group secondary coils by means of the second connector so as to form a serial loop of the secondary coils, and a part of the serial loop of the secondary coils being connected to ground,
the first fault detection unit comprises:
four pairs of first group third coils, in which first group third coils, which are aligned as a pair and AC voltage is induced thereto from different first connectors, are serially connected to each other to offset AC voltage generated from the paired first group third coils; and
four first group diodes having input terminals connected to one end of the paired first group third coils so as to generate a voltage detection value by detecting voltage generated from the paired first group third coils;
the second fault detection unit comprises:
four pairs of second group third coils, in which second group third coils, which are aligned as a pair and AC voltage is induced thereto from different first connectors, are serially connected to each other to offset AC voltage generated from the paired second group third coils; and
four second group diodes having input terminals connected to one end of the paired second group third coils so as to generate a voltage detection value by detecting voltage generated from the paired second group third coils;
the first group third coils are connected to the second group third coils by means of the second connector, one end of the paired third coils of the first and second groups being connected to ground, and
the fault detector compares the voltage detection value generated from output terminals of the diodes with a predetermined threshold value to detect a fault and generates the comparison result.

22. An inverter circuit comprising:
inverters converting DC voltage into AC voltage to transmit the AC voltage to N pairs of discharge tubes;
2N balance transformers connected to output terminals of the inverters; and
a fault detection device that detects a fault based on values of current applied to the balance transformers, wherein
each balance transformer comprises:
N pairs of primary coils connected between the output terminals of the inverters and the N pairs of discharge tubes, respectively; and
2N secondary coils serially connected to each other to form a loop, in which a part of the loop being connected to ground, and
the fault detection device comprises:
N pairs of third coils aligned corresponding to the N pairs of primary coils, in which adjacent third coils, which are aligned as a pair, are serially connected to each other to offset AC voltage generated from the paired third coils, one end of the paired third coils being connected to ground;
N diodes having input terminals connected to the other end of the paired third coils so as to generate a voltage detection value by detecting voltage generated from the paired third coils; and
a fault detector comparing the voltage detection value generated from output terminals of the N diodes with a predetermined threshold value to detect a fault and generating the comparison result.

23. The inverter circuit as claimed in claim 22, wherein N is an even natural number greater than 2.

24. The inverter circuit as claimed in claim 23, further comprising an indicator that displays the comparison result provided from the fault detector.
